# EUROPEAN PATENT APPLICATION

(11) **EP 2 613 540 A1**
(43) Date of publication of application: **10.07.2013**
(21) Application number: 11821314.9
(22) Date of filing: 30.08.2011
(51) Int. Cl.: H04N 13/04, G02B 27/22, G09G 5/36

(54) **VIDEO PROCESSING DEVICE, VIDEO PROCESSING METHOD, COMPUTER PROGRAM AND DELIVERY METHOD**

(30) Priority: 03.09.2010 JP 2010197376
(71) Applicant: Panasonic Corporation, Osaka 571-8501 (JP)
(72) Inventor: KAWAGUCHI, Toru, Chuo-ku Osaka 540-6207 (JP)
(74) Representative: Grünecker, Kinkeldey, Stockmair & Schwanhäusser
(86) International application number: PCT/JP2011/004846
(87) International publication number: WO 2012/029293

(57) **Abstract**

The present invention aims to provide a video processing device allowing notifications to be made to viewers of a program without annoyances being posed thereby. A video processing device comprises a receiver receiving video information including a subject program and flag information indicating whether the video information includes type-1 guide information for making a notification when the subject program is in 3D; a determiner determining, according to received flag information, whether the user is to be notified of the type-1 guide information; and an output controller outputting a program from the received video information, outputting type-2 guide information for making the notification when the subject program is in 3D and the determiner determines that the user is not to be notified of the type-1 guide information, and preventing output of the type-2 guide information when the determiner determines that the user is to be notified of the type- guide information.

## Description

### [Technical Field]

The present invention relates to technology for displaying video, and particularly relates to the display of 3D video.

### [Background Art]

In recent years, opportunities for stereoscopic viewing of 3D video in movie theatres and the like have increased. Demand is growing for 3D video programming to be broadcast to digital televisions.

Patent Literature 1 discusses technology for making notifications regarding whether content to be displayed is stereoscopic or monoscopic video.

According to Patent Literature 1, a stereoscopic video display apparatus determines whether a signal input thereto is intended for displaying stereoscopic video or monoscopic video, and then accordingly generates a mark for display with the video. For example, when the input signal is intended for displaying stereoscopic video, a mark indicating this fact (a 3D mark) is generated and displayed along with the stereoscopic video.

Therefore, the user can be informed of whether the program currently being viewed is stereoscopic or monoscopic.

### [Citation List]

### [Patent Literature]

[Patent Literature 1]
   Japanese Patent Application Publication H7-274216

### [Summary of Invention]

### [Technical Problem]

Broadcasts of 3D video are expected to increase in the near future due to growing demand for 3D programming as described above. As such, broadcasters are expected to broadcast video indicating that a given program is in 3D so that viewers can be informed of this fact when the given program is broadcast.

However, while every 3D program could include a notification indicating that the program is in 3D, this is not the only possible approach. When this approach is taken, then according to the above-listed Patent Literature 1, viewer notifications regarding 3D programming are additionally made by having the stereoscopic viewing apparatus generate a 3D mark when a program is in 3D to indicate that the program contains stereoscopic video. This results in the generated 3D mark being displayed along with the stereoscopic video itself. The viewer thus receives a duplicate notification, which may prove to be an annoyance.

The present invention aims to provide a video processing device, a video processing method, and a computer program that allows notifications to be made to viewers of a program without any annoyances being posed thereby.

### [Solution to Problem]

In one aspect of the present invention, a video processing device comprises: a receiver operable to receive video data including a subject program for viewing, and flag information indicating whether or not the video data includes type-1 guide information, the type-1 guide information being used for making a predetermined notification pertaining to 3D viewing to a user when the subject program is in 3D; a determiner operable to determine, according to the flag information so received, whether or not the user is to be notified using the type-1 guide information when the subject program is in 3D; and an output controller operable to output programming from the video data so received, and, when the subject program is in 3D (i) output type-2 guide information for making the predetermined notification to the user when the determiner determines that the user is not to be notified using the type-1 guide information, and (ii) prevent output of the type-2 guide information when the determiner determines that the user is to be notified using the type-1 guide information.

### [Advantageous Effects of Invention]

According to the above, the video processing device prevents the output of a type-2 guide notification when a type-1 guide notification is made by the program being viewed, and outputs a type-2 guide notification when no type-1 guide notification is made. Thus, no duplication of notifications occurs during the program. Therefore, the user is able to view programs without being bothered by announcements regarding 3D programming.

### [Brief Description of Drawings]

Fig. 1 illustrates a usage mode for a digital television 100.
Fig. 2 illustrates an example of stereoscopic display.
Fig. 3 illustrates an example of Side-by-Side format video display.
Fig. 4 illustrates an example of a frame structure used in stereoscopic viewing.
Fig. 5 is a block diagram showing the configuration of the digital television 100.
Fig. 6 illustrates an example of the data structure for an EIT 130 that includes a 3D program ID flag.
Fig. 7 is a block diagram showing the configuration of an output processor 105.
Fig. 8A shows a sample type-2 guide notification display, and Fig. 8B, shows a sample type-3 guide notification display.
Fig. 9 is a flowchart showing a program distribution process.
Fig. 10 is a flowchart showing the general process of determining whether or not guide information is to be generated by a receiving device.
Fig. 11 is a flowchart showing a first judgement process.
Fig. 12 is a flowchart showing a second judgement process.
Fig. 13 is a flowchart showing a buffer writing process.
Fig. 14 is a flowchart showing the first judgement process when a display interval is set for a type-1 guide notification.
Fig. 15A illustrates a specific example in which no type-1 guide notification is made by the upcoming program, and Fig. 15B illustrates a specific example in which a type-1 guide notification is made by the upcoming program.
Fig. 16 illustrates a specific example in which a type-3 guide notification is made when changing from a 3D program to a 2D program.
Fig. 17 illustrates a specific example in which no type-1 guide notification is made when changing channels.
Fig. 18 illustrates a specific example in which a type-1 guide notification is made when changing channels.
Fig. 19 illustrates a specific example in which a type-1 guide notification is made as a display interval has not yet passed when changing channels.
Fig. 20 illustrates a specific example in which a program viewing mode is selected.
Fig. 21 illustrates a usage mode for a digital television 1100.
Fig. 22 is a block diagram showing the configuration of a playback device 1200.
Fig. 23 is a block diagram showing the configuration of a content memory 1201.
Fig. 24 is a block diagram showing the configuration of the digital television 1100.
Fig. 25 is a flowchart showing the process of determining whether or not a type-2 guide notification is to be generated by a playback device when playing back content.
Fig. 26 is a flowchart showing a playback process.
Fig. 27 illustrates a specific example in which guide information is output when content is played back.
Fig. 28 is a block diagram showing the configuration of a digital television 2100.
Fig. 29 is a flowchart showing the buffer writing process.
Fig. 30A illustrates a specific example in which a type-2 guide notification is made when changing from a 2D program to a 3D program, and Fig. 30B illustrates a specific example in which a type-1 guide notification is made when changing from a 2D program to a 3D program.
Fig. 31 illustrates a specific example in which a type-1 guide notification is made when changing from a 3D program to a 2D program.
Fig. 32A illustrates a specific example in which a type-2 guide notification is made using a guide advisor flag, and Fig. 32B illustrates a specific example in which a type-1 guide notification is made using the guide advisor flag.
Fig. 33 illustrates a specific example in which a type-1 guide notification is made using the guidance flag.
Fig. 34 illustrates a specific example in which a type-2 guide notification is made using the guidance flag.
Fig. 35 illustrates an example of a VideoAttributes extension.
Fig. 36 illustrates a content example of a 3D element 3001.
Fig. 37 illustrates a sample descriptor in the VideoAttributes code.
Fig. 38 illustrates an example of an ERI extension.
Fig. 39 illustrates another example of an ERI descriptor.
Fig. 40 illustrates a frame packing arrangement SEI extension defined in the H.264/MPEG4 AVC standard.

### [Description of Embodiments]

### 1. Embodiment 1

A video processing device pertaining to the present Embodiment is hereinafter described with reference to the drawings.

### 1.1 Stereoscopic Viewing

First of all, a basic explanation of the principles of stereoscopic viewing is given below. Stereoscopic viewing implementations include methods using light beam playback systems, such as holography, and systems using parallax images.

The former method, i.e., holography, is technology capable of reproducing a stereoscopic object perfectly identical to ordinary objects as perceived by human beings. However, while this technology is theoretically solid, real-time holographic movie playback requires a computer performing an immense amount of calculations and a display device with a resolution of thousands of lines per millimeter. This is extremely difficult to accomplish with present technology, and few examples of commercial implementations exist.

The latter method, i.e., of systems using parallax images, is described below. Ordinarily, there is a slight discrepancy between an image as viewed by the right eye and the same image as viewed from the left eye due to the positional difference between the right and left eyes. Human beings make use of this difference to perceive stereoscopic images. A stereoscopic display employing parallax images uses the human parallax to cause a flat image to appear stereoscopic.

The advantage of such an approach is that stereoscopic viewing can be realized simply by preparing a pair of videos, each made up of images for one of two viewpoints, namely one for the right eye and one for the left eye. From a technical standpoint, technology for ensuring that each eye sees only the images intended therefor has been realized in various forms, notably through alternate-frame sequencing.

Alternate-frame sequencing involves displaying left-view and right-view images in alternation along the time axis. The afterimage effect of the eyes causes the brain to combine the left and right views into a single scene, which is perceived stereoscopically.

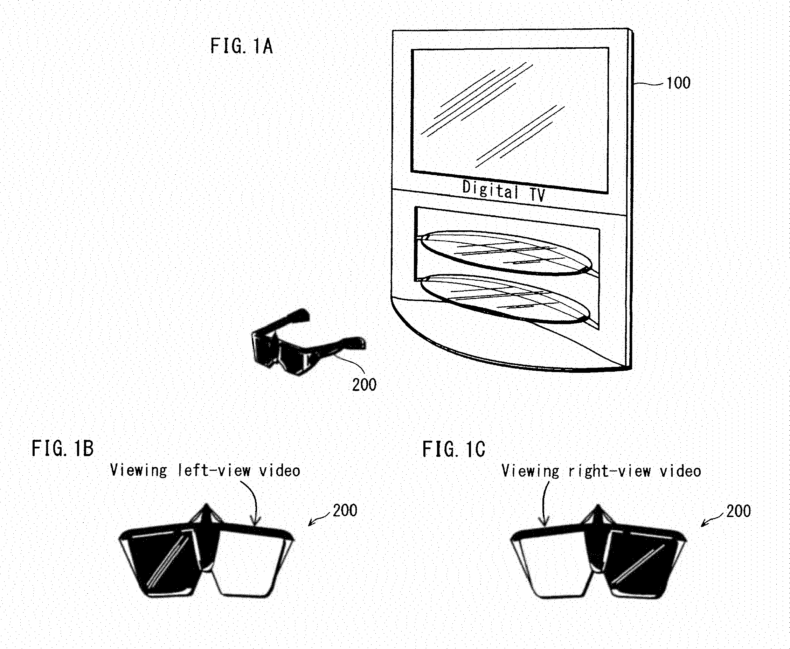

The video processing device of the present Embodiment is a television on which 3D video can be viewed. Fig. 1A illustrates a usage act of the video processing device. As shown, the video processing device includes a digital television 100 and 3D glasses 200 worn by a user.

The digital television 100 is capable of displaying both 2D and 3D video, displaying video by playing back streams that are included in received broadcast waves.

The digital television 100 of the present Embodiment realizes stereoscopic viewing by having the user wear the 3D glasses 200. The 3D glasses 200 include liquid crystal shutters, and employ alternate-frame sequencing to show parallax images to the user. The parallax images belong to a pair of videos, one for the right eye and one for the left eye. Stereoscopic viewing is accomplished by showing each eye only those pictures corresponding thereto. Fig. 1B shows the 3D glasses when displaying left-view video. While the left-view video is on screen, the above-described 3D glasses 200 make the liquid crystal shutter corresponding to the left eye transparent, and make the liquid crystal shutter corresponding to the right eye opaque. Fig. 1C shows the 3D glasses when displaying right-view video. While the right-view video is on-screen, the 3D glasses 200 make the liquid crystal shutter corresponding to the right eye transparent, and make the liquid crystal shutter corresponding to the left eye opaque, in a reversal of the above.

This concludes the video processing device usage act description.

Next, the method by which parallax images are used in stereoscopic viewing is described.

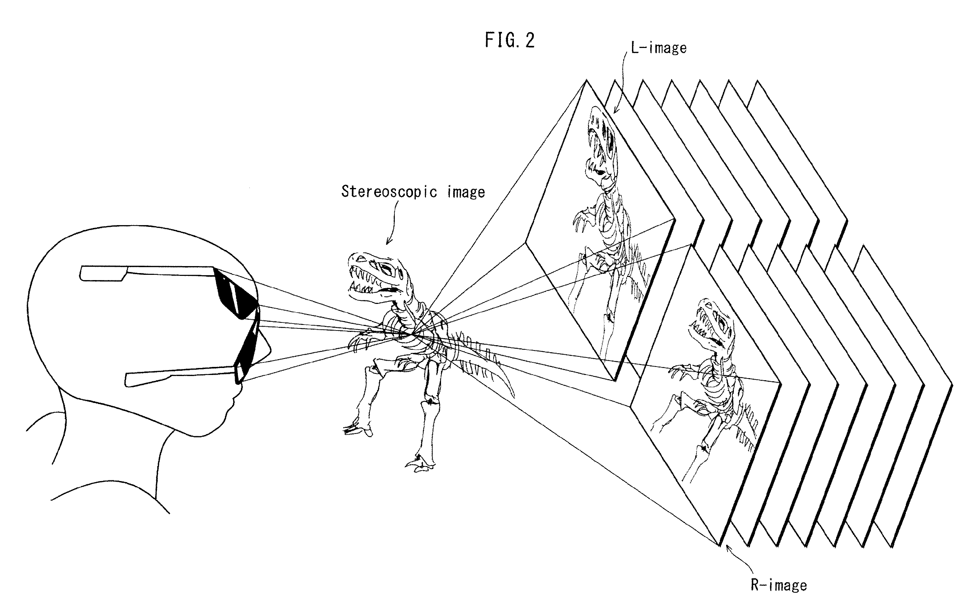

The parallax image method involves preparing one video intended for the right eye and another video intended for the left eye. Stereoscopy is achieved by having each eye see only those images intended therefor. Fig. 2 illustrates the user's head on the left-hand side, while the right-hand side illustrates a dinosaur skeleton as the subject viewed by left eye and by the right eye. By alternating between transparency and opacity for each eye, the afterimage reaction in the brain causes the left and right views to be combined into a single scene. Thus, a stereoscopic image is perceived at the intersection of the lines extending from the head to the center of Fig. 2.

The parallax images include images intended for the left eye, termed left-view images (L-pictures), and images intended for the right eye, termed right-view images (R-pictures). By extension, a video taking the L-pictures as constituent pictures is termed the left-view video, and a video taking the R-pictures as constituent pictures is termed the right-view video.

Notably, 3D formats for the combined and compression-coded left-view and right-view videos include Frame Compatible and Service Compatible formats.

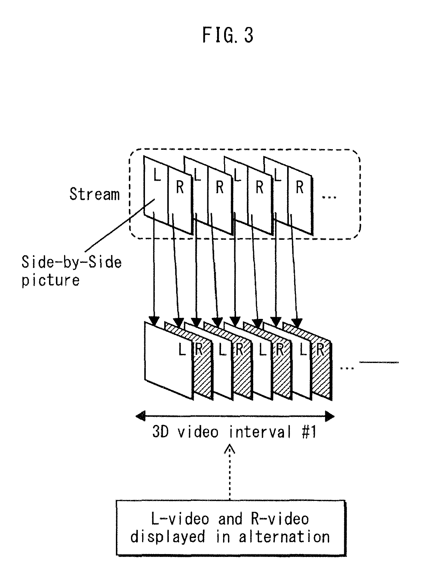

The former case, namely Frame Compatible, involves combining pictures taken from each of the left-view and right-view videos into a single picture through skipping or compression. Then, standard video compression-coding is applied to the result. Fig. 3 shows an example in the Side-by-Side format. In the Side-by-Side format, pictures corresponding to each of the left-view and right-view videos are horizontally compressed by half. The two pictures are then lined up to form a single, combined picture. The video made up of these combined pictures undergoes standard compression-coding and is converted into stream form. Then, at playback time, the stream is decoded into video in accordance with standard compression-coding methods. The pictures from the decoded video are split into left and right pictures. The pictures corresponding to the left-view and right-view videos are then obtained by horizontally expanding these pictures twofold. The left-view video pictures (L-pictures) and the right-view video pictures (R-pictures) so obtained are displayed in alternation, thus realizing a stereoscopic image as illustrated by Fig. 2. Other methods for the Frame Compatible format exist, such as the Top and Bottom format in which the left and right images are aligned top-to-bottom, and the Line Alternative format in which the left and right images are alternate line-by-line within a single picture.

The latter case, namely the Service Compatible format, is described below. The Service Compatible method involves digitizing the left-view and right-view videos, compression-coding the video streams so obtained, and then utilizing the resulting left-view video and right-view video streams.

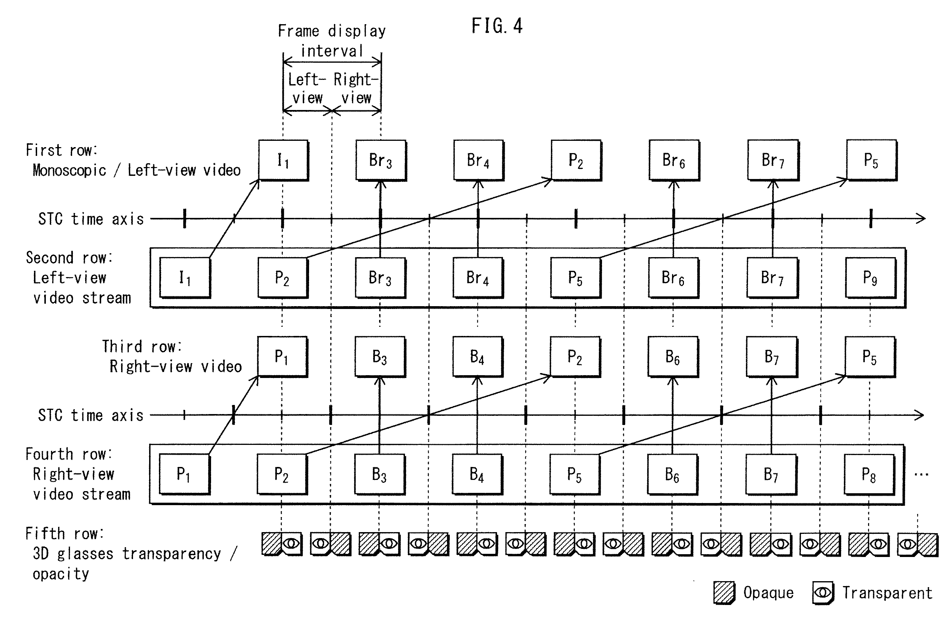

Fig. 4 shows a sample internal structure for the left-view video and right-view video streams used for stereoscopic viewing in the Service Compatible format.

The second row shows the internal structure of the left-view video stream. The stream includes the pictures I1, P2, Br3, Br4, P5, Br6, Br7, and P9, in the stated order. These pictures are decoded in accordance with the Decode Time Stamps (DTS). The first row indicates the left-view pictures. The decoded pictures I1, P2, Br3, Br4, P5, Br6, Br7, and P9 are then played back in accordance with the Presentation Time Stamps (PTS), in the order I1, Br3, Br4, P2, Br6, Br7, P5. The left-view pictures are thus played back. Here, pictures having undergone intra-picture predictive coding, thus being decodable without waiting for a reference picture, are termed I-pictures. A picture is a unit of encoding that encompasses frames as well as fields. A picture that has undergone inter-picture predictive coding and is decoded with reference to one previously-decoded picture is termed a P-picture. A picture that has undergone inter-picture predictive coding and is decoded with reference to two previously-decoded pictures at once is termed a B-picture. A B-picture that is in turn referenced by another picture is termed a Br-picture.

The fourth row shows the internal structure of the right-view video stream. The right-view video stream includes the pictures P1, P2, B3, B4, P5, B6, B7, and P8, in the stated order. These pictures are decoded in accordance with the DTS. The third row indicates the right-view pictures. The decoded pictures P1, P2, B3, B4, P5, B6, B7, and P8 are then played back in accordance with the PTS, in the order P1, B3, B4, P2, B6, B7, P5. The right-view pictures are thus played back. However, for stereoscopic playback using alternate-frame sequencing, one of the pair of a left-view picture and a right-view picture sharing the same PTS is displayed only after a delay of half the PTS interval (hereinafter, 3D display delay).

The fifth row shows the changing state of the 3D glasses 200. As shown, the right-eye shutter is closed whenever a left-view picture is displayed, while the left-eye shutter is closed whenever a right-view picture is displayed.

The left-view and right-view videos undergo inter-picture predictive coding that takes advantage of temporal correlations, and are further compressed using inter-picture predictive coding that takes advantage of inter-viewpoint correlations. The pictures of the right-view video stream are compressed with reference to pictures from the left-view video stream with matching presentation time stamps.

For example, the leading P-picture of the right-view video stream references the I-picture of the left-view video stream, the B-pictures of the right-view video stream each reference a Br-picture from the left-view video stream, and the second P-picture of the right-view video stream references the first P-picture of the left-view video stream.

Whichever of the compression-coded left-view and right-view video streams can be decoded independently of the other is termed the base-view video stream. Furthermore, given that the pictures making up the base-view video stream are compression-coded according to inter-frame correlations, whichever of the left-view and right-view video streams can only be decoded after the base-view stream has been decoded is termed the dependent video stream. The base-view video stream and the dependent video stream may be stored and transported as separate streams, or may be multiplexed into a single stream, such as an MPEG2-TS stream.

### 1.2 Digital Television 100 Configuration

The configuration of the digital television 100 is described below as an example of a video processing device displaying 3D or 2D programming.

Specifically, the digital television 100 is a plasma television receiving 2D and 3D video as digital broadcast waves (streams). Also, the digital television 100 is connected to an IP network and to a playback device, and can display 2D and 3D video output therefrom.

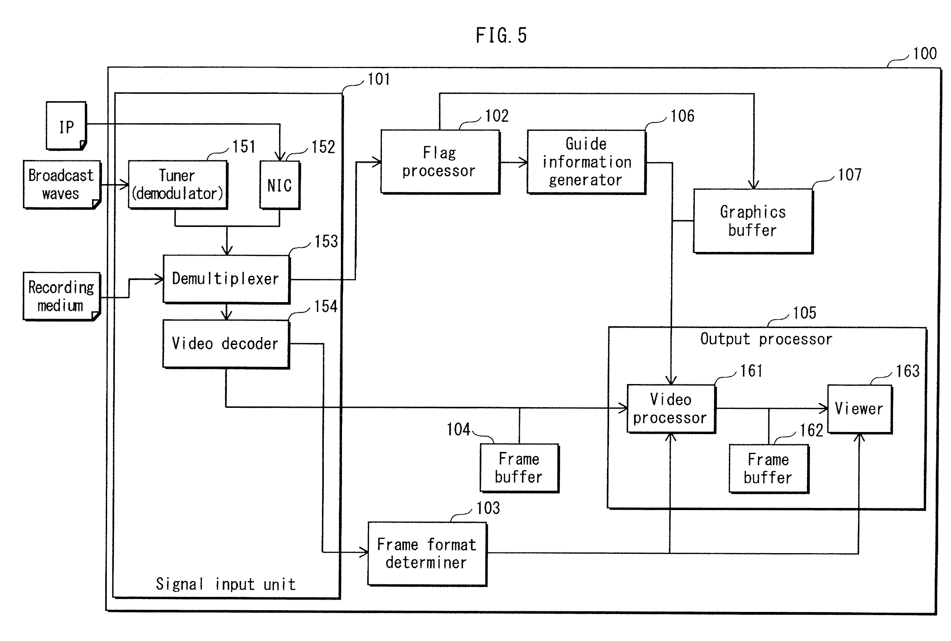

As shown in Fig. 5, the digital television 100 includes a signal input unit 101, a flag processor 102, a frame format determiner 103, a frame buffer 104, an output processor 105, a guide information generator 106, and a graphics buffer 107.

While not diagrammed, the digital television 100 also has a timekeeping function (hereinafter, timekeeping unit).

### (1) Signal Input Unit 101

The signal input unit 101 receives streams that are delivered (output) from an external source and that include frames making up 2D video as well as frames making up 3D video. The stream is a video stream including frames making up 2D and 3D videos, multiplexed with SI (service information). Audio, subtitle, and other multimedia streams, such as BML (Broadcast Markup Language), may also be multiplexed, as required. The SI includes information regarding the program formed by the various multiplexed streams.

In this example, the broadcast (output) 3D video frames in a 3D format, such as Side-by-Side. In the Side-by-Side format, as described above, each frame includes an image belonging to video intended for the left eye (hereinafter, L-video) and an image belonging to video intended for the right eye (hereinafter, R-video).

Also, in the present Embodiment, the broadcast (output) frames are in a signal format following the H.264/MPEG4 AVC standard and include SEI (Supplemental Enhancement Information) containing information indicating whether each frame forms 2D or 3D video, whether the format of 3D video is Side-by-Side or other, and so on (hereinafter, 3D video information).

An example of the SI data structure follows. In the present Embodiment, an EIT (Event Information Table) is used as the SI.

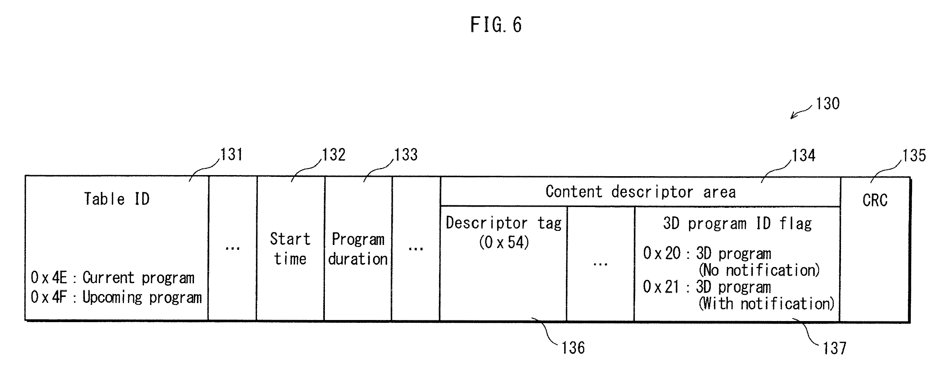

As shown in Fig. 6, the EIT 130 includes a table ID 131, a start time 132, a program duration 133, a content descriptor area 134, and a CRC (cyclic redundancy check) 135.

The table ID 131 identifies whether the EIT 130 is associated with the current program, or with the upcoming program. Specifically, the table ID 131 is set to 0x4E when the EIT 130 is associated with the current program, and is set to 0x4F when the EIT 130 is associated with the upcoming program.

The start time 132 indicates the start time for the program specified by the table ID 131. The program duration 133 indicates the duration of the program specified by the table ID 131.

The CRC 135 is a value used to detect and correct data errors. Given that the CRC format is well-known error detection and correction technology, explanations thereof are here omitted.

The content descriptor area 134 contains information concerning the program to which the EIT corresponds. Specifically, the content descriptor area 134 includes a descriptor tag 136 and a 3D program 1D flag 137. The descriptor tag 136 is set to 0x54 to indicate the nature of the content descriptor area. When the EIT is associated with a 3D program, the 3D program ID flag 137 indicates whether or not information notifying the user to have the 3D glasses ready (hereinafter, a type-1 guide notification) has been provided in advance for the program. Here, as shown in Fig. 6, the 3D program ID flag 137 may be set to 0x20 to indicate that the corresponding program is a 3D program and that a type-1 guide notification has not been so provided. That is, the program does not contain a type-1 guide notification. Also, the 3D program ID flag 137 may be set to 0x21 to indicate that the corresponding program is a 3D program and that a type-1 guide notification has been provided. That is, the program itself contains a type-1 guide notification. The content descriptor area 134 may also indicate whether or not the program is being extended, the presence of news interruptions, and so on, though these are not diagrammed. Furthermore, the 3D program ID flag 137 is set to one of the two values described above whenever the corresponding program is in 3D, and is not set at all when the program is in 2D. In other words, if either of the two values described above is set in the corresponding area, then the program is in 3D. If no value is set, then the program is in 2D.

The EIT 130 is generated by the broadcaster in advance, before the corresponding program is to be broadcast.

As shown in Fig. 5, the signal input unit 101 includes a tuner (demodulator) 151, a NIC (Network Interface Card) 152, a demultiplexer 153, and a video decoder 154.

The tuner 151 is capable of receiving digital broadcast waves (streams) and demodulating the signals received therein.

The NIC 152 is connected to an IP network and is capable of receiving streams output from external sources.

The demultiplexer 153 separates a received stream into a stream containing 2D or 3D video frames and the SI (in this case, the EIT), then outputs the video stream to the video decoder 154 and the EIT to the flag processor 102. The demultiplexer 153 is also capable of reading streams from a recording medium, adding to the input from the tuner 151 and the NIC 152.

Upon receiving the 2D or 3D video stream from the demultiplexer 153, the video decoder 154 decodes the video stream and simultaneously extracts the 3D video information contained in the individual video stream frames. The video decoder 154 generates video one frame at a time. When 3D video frames are being processed, frames that are in the Side-by-Side format are not divided into L-pictures and R-pictures.

The video decoder 154 writes the individual video frames so generated to the frame buffer 104 and outputs the 3D video information extracted from the frames to the frame format determiner 103.

### (2) Flag Processor 102

The flag processor 102 determines whether or not a guide notification for viewing 3D or 2D programming is to be generated for the user. The guide information for viewing 3D programming informs the user that the 3D glasses should be kept ready (hereinafter, type-2 guide notification). In contrast, the guide notification for viewing 2D programming informs the user that the 3D glasses should be removed (hereinafter, type-3 guide notification).

The flag processor 102 includes a notification flag indicating whether or not one of a type-1 guide notification and a type-2 guide notification has been output. The initial value (e.g., 0) indicates that a type-1 guide notification or a type-2 guide notification has not been output. The notification flag value is set to 1 to indicate that a type-1 guide notification or a type-2 guide notification has been output.

The function of the flag processor 102 is described below in two possible cases, one in which the current program is being processed, and one in which the upcoming program is being processed.

### (2-1) Current Program Processing

When the device power supply is activated, or when the channel is changed, the flag processor 102 initializes the notification flag and the graphics buffer 107. In the former case, the channel last selected before power supply interruption is automatically re-selected.

The flag processor 102 determines whether the current program is in 2D or 3D according to the presence or absence of the 3D program ID flag included in the corresponding EIT.

If the current program is in 3D, the flag processor 102 further determines whether or not to generate a type-2 guide notification depending on the value of the 3D program ID flag included in the corresponding EIT. Specifically, when the value of the 3D program ID flag included in the EIT corresponding to the current program is set to 0x20, the flag processor 102 determines that the current program is in 3D and that a type-1 guide notification has not been output, and thus that type-2 guide notification is to be generated. Then, the flag processor 102 sends first instruction information to the guide information generator 106 indicating that a type-2 guide notification is to be generated, and changes the value of the notification flag to 1. When the value of the 3D program ID flag is 0x21, the flag processor 102 determines that the current program is in 3D and that a type-1 guide notification is being output, meaning that type-2 guide notification need not be generated. The flag processor 102 then changes the value of the notification flag 1.

### (2-2) Upcoming Program Processing

Before a channel changes from one program to another (e.g., one minute before the change) the flag processor 102 determines whether the upcoming program is in 2D or in 3D according to the presence or absence of the 3D program ID flag in the corresponding EIT. The time immediately before the program change, i.e., the time at which this determination is carried out, is specified by the timekeeping unit and the start time included in the EIT corresponding to the upcoming program. Again, the flag processor 102 initializes the graphics buffer 107.

If the 3D program ID flag included in the EIT corresponding to the upcoming program has been set, then the flag processor 102 determines that the upcoming program is in 3D, and further determines whether or not to generate a type-2 guide notification according to the value of the 3D program ID flag and of the notification flag also included in the EIT. Specifically, when the 3D program ID flag included in the EIT corresponding to the upcoming program is set to 0x20 and the notification flag is set to 0, the flag processor 102 determines that a type-2 guide notification is to be generated, and thus sends first instruction information to the guide information generator 106 and changes the value of the notification flag to 1.

When the flag processor 102 determines that the 3D program ID flag included in the EIT corresponding to the upcoming program has not been set, the upcoming program is identified as being in 2D. When the upcoming program is identified as being in 2D, the flag processor 102 determines whether or not a type-3 guide notification is to be generated. Specifically, the flag processor 102 determines whether or not the value of the notification flag is 1. If the value of the notification flag is 1, then the flag processor 102 determines that a type-3 guide notification is to be generated. Upon identifying the need to generate the type-3 guide notification, the flag processor 102 sends second instruction information to the guide information generator 106 indicating that a type-3 guide notification is to be generated, and changes the value of the notification flag to 0.

The reason underlying the use of the notification flag to determine whether or not to generate the type-3 guide notification is described below.

As described above, when the program being broadcast at that point in time is in 3D, the notification flag is set to 1. After being set to 1, the value of the notification flag remains unchanged as long as programming is in 3D. Therefore, when the upcoming program is identified as being in 2D, the current program can be identified as being in 3D by the notification flag value of 1.

### (3) Frame Format Determiner 103

Upon receiving the 3D video information from the video decoder 154, the frame format determiner 103 uses the value thereof to determine whether the decoded frames are for 2D or 3D video and, for 3D video, also identifies the format as Side-by-Side or other.

The frame format determiner 103 notifies the output processor 105 of the determined results.

### (4) Frame Buffer 104

The frame buffer 104 is an area intended to store a frame decoded by the video decoder 154.

### (5) Guide Information Generator 106

The guide information generator 106 generates a type-2 guide notification in response to the result determined by the flag processor 102.

That is, upon receiving the first instruction information from the flag processor 102, the guide information generator 106 generates the type-2 guide notification.

Also, upon receiving second instruction information from the flag processor 102, the guide information generator 106 generates the type-3 guide notification.

Having generated one of the type-2 guide notification and the type-3 guide notification in response to the received instruction information, the guide information generator 106 writes the resulting notification to the graphics buffer 107.

### (6) Graphics Buffer 107

The graphics buffer 107 is an area for storing the type-2 guide notification or the type-3 guide notification generated by the guide information generator 106. Specifically, the graphics buffer 107 includes a first area for storing the type-2 guide notification and a second area for storing the type-3 guide notification.

### (7) Output Processor 105

The output processor 105 outputs video in accordance with the refresh rate established for 2D video or for 3D video. Also, the output processor 105 outputs the type-2 guide notification or the type-3 guide notification, if generated by the guide information generator 106, along with the video.

As shown in Fig. 5, the output processor 105 includes a video processor 161, a frame buffer 162, and a viewer 163.

### (7-1) Frame Buffer 162

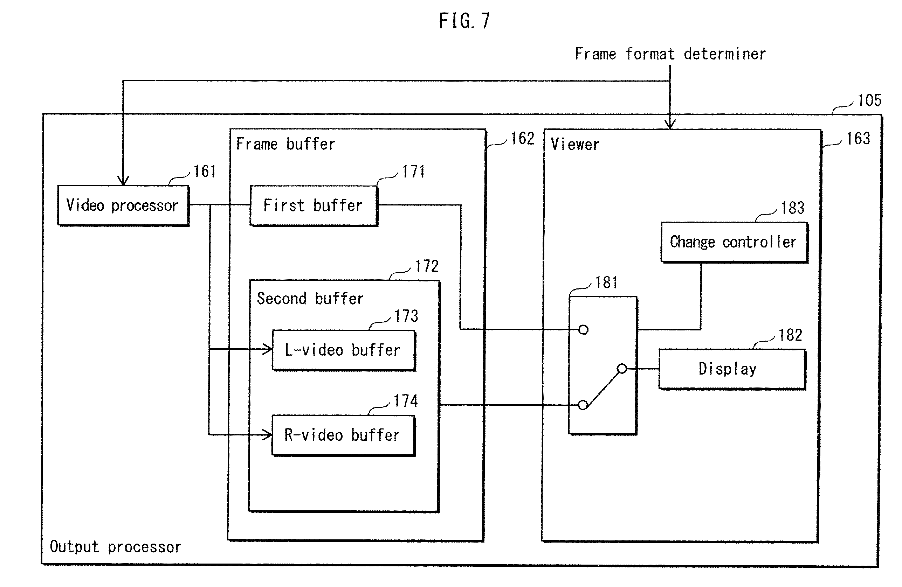

As shown in Fig. 7, the frame buffer 162 has a first buffer 171 and a second buffer 172.

The first buffer 171 stores the frames included in 2D program streams.

The second buffer 172 includes an L-video buffer 173 and an R-video buffer 174, and stores therein a frame included in a 3D program stream.

### (7-2) Video Processor 161

The video processor 161 outputs the frame (video) stored in the frame buffer 104. When a type-2 guide notification has been generated by the guide information generator 106, the video processor 161 also performs processing allowing the type-2 guide notification to be displayed together with the appropriate video (hereinafter, overlay processing).

The specific operation of the video processor 161 is described below.

The video processor 161 determines whether a subject video frame forms 2D or 3D video, and, for the latter, also identifies the format as Side-by-Side or other. These determinations are made using the results found by the frame format determiner 103.

If the video is found to be in 3D, then the video processor 161 splits the frame into two halves and expands the two halves, thus generating an L-picture and an R-picture. Specifically, if the frame is in the Side-by-Side format, then the video processor 161 splits the frame vertically into left and right halves. If the frame is in the Top and Bottom format, then the video processor 161 splits the frame horizontally into top and bottom halves. Thus, the L-picture and R-picture are obtained. The video processor 161 stores the generated L-picture in the L-video buffer 173 and the generated R-picture in the R-video buffer 174.

For non-3D video, i.e., 2D video, the video processor 161 stores the frame (video) in the first buffer 171.

Furthermore, if the guide information generator 106 generates a type-2 guide notification when the device power supply is activated and when the channel is changed, then the video processor 161 executes overlay processing of the type-2 guide notification stored in the graphics buffer 107 on the subject frame (the L-picture and the R-picture), and then writes the result to the predetermined buffer within the second buffer 172.

If either of the type-2 guide notification and the type-3 guide notification has been generated by the guide information generator 106 upon confirming the upcoming program, then the video processor 161 executes overlay processing of the guide notification stored in the graphics buffer 107 on the subject frame, and then writes the result to the first buffer 171. For example, if a type-2 guide notification is stored in the first area of the graphics buffer 107 at a predetermined time (e,g., 30 seconds before program change), then the video processor 161 performs overlay processing of the type-2 guide notification on the subject frame (in this case, 2D video). Similarly, if a type-3 guide notification is stored in the second area of the graphics buffer 107 at program change time (when the upcoming program begins), then the video processor 161 performs overlay processing of the type-3 guide notification on the subject frame (in this case, 2D video). The predetermined time (30 seconds before program change) and the program change time (when the upcoming program begins) are identified by the timekeeping unit and the start times included in the respective EITs of the current program and the upcoming program. The overlay processing involves, for example, overlaying the type-2 guide notification or the type-3 guide notification on the frames displayed for a five-second interval. Thus, the type-2 guide notification or the type-3 guide notification is displayed with the subject frames for five seconds.

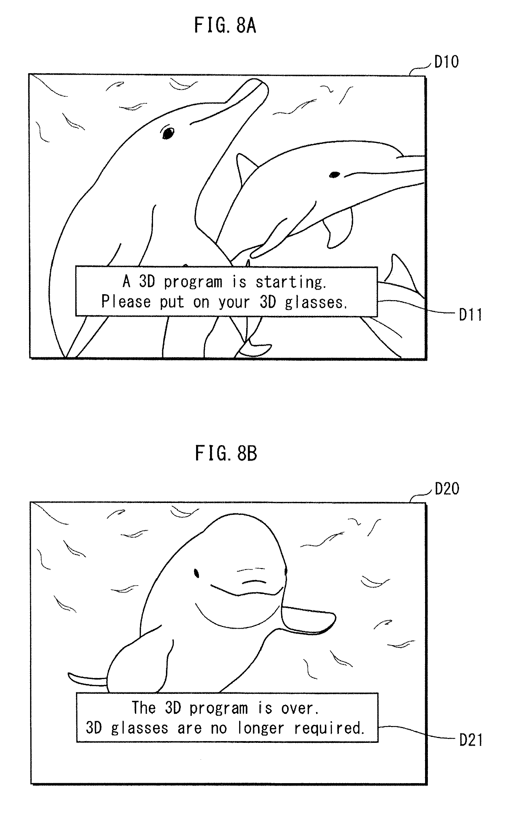

Examples of a type-2 guide notification and a type-3 guide notification display are given in Figs. 8A and 8B.

In Fig. 8A, image D10 shows an example of a type-2 guide notification being displayed. As described above, the image D10 illustrates the video that is to be output for a five-second interval beginning 30 seconds before program change, displayed along with the message D11 reading "A 3D program is starting. Please put on your 3D glasses." serving as the type-2 guide notification.

In Fig. 8B, image D20 shows an example of the type-3 guide notification being displayed. As described above, the image D20 illustrates the video that is to be output for a five-second interval beginning 30 seconds before program change, displayed along with the message D21 reading "The 3D program is over. 3D glasses are no longer required." serving as the type-3 guide notification.

### (7-3) Viewer 163

As shown in Fig. 7, the viewer 163 includes a switch 181, a display 182, and a change controller 183.

The switch 181 is connected to the viewer 163 and switches between the first buffer 171 and the second buffer 172.

The change controller 183 switches between the connected buffers according to the results determined by the frame format determiner 103. Specifically, if the output subject frame is in 3D, then the change controller 183 controls the switch 181 so as to connect to the second buffer 172. If the output subject frame is in 2D, then the change controller 183 controls the switch 181 so as to connect to the first buffer 171.

The display 182 changes the video refresh rate according to the results determined by the frame format determiner 103 and displays video accordingly. For example, the display 182 uses a refresh rate of 60 Hz to output subject frames of 2D video, reading the 2D video from the first buffer 171, which is connected to the switch 181, for display. Similarly, the display 182 uses a refresh rate of 120 Hz to output subject frames of 3D video, reading the video from the L-video buffer 173 and the R-video buffer 174 of the second buffer 172, which is connected to the switch 181, for display.

Should the user choose to view 3D programming in 2D (i.e., by displaying the Side-by-Side format as-is, or else by expanding either one of the left and right halves for display), the output processor 105 prioritizes this choice and may handle the programming as being in 2D, regardless of the determination made by the frame format determiner 103.

### 1.3 Operations

### (1) Program Distribution Process

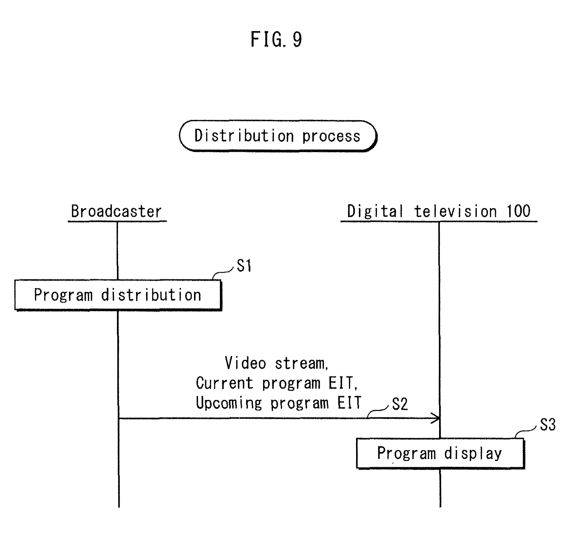

The process performed by the broadcaster (not diagrammed) distributing the programming is described below, with reference to the flowchart shown in Fig. 9.

The broadcaster delivers (distributes) the subject programming in stream format (steps S1, S2). As described above, a transmitted stream is a video stream that includes frames making up 2D or 3D video, multiplexed with SI (in this case, the EIT).

Upon receiving a stream transported by the broadcaster, the digital television 100 decodes the video included in the stream for display (step S3). Accordingly, the digital television 100 displays programming transmitted by the broadcaster. The detailed operations of the digital television 100 will be described later.

Although Fig. 9 indicates that program distribution is performed using streams from the broadcaster, the streams may instead be distributed by a device connected to an IP network.

### (2) Guide Information Generation Operation Summarization

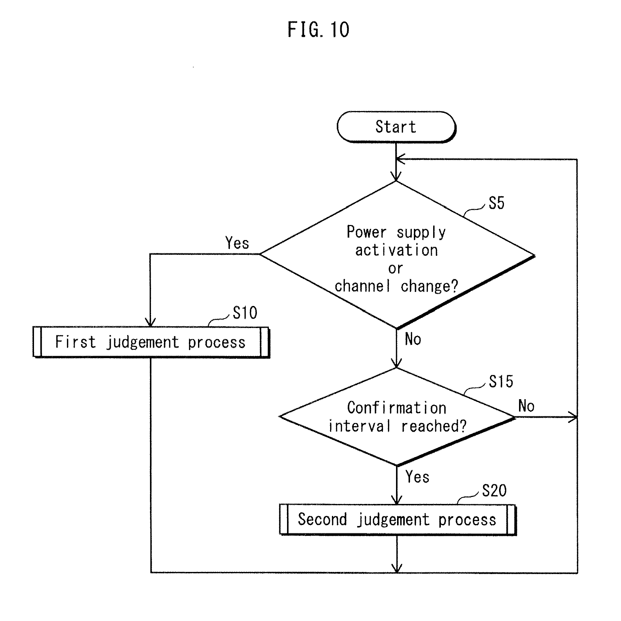

The process of determining whether or not the guide information is to be generated by the receiving device itself is described below with reference to the flowchart shown in Fig. 10.

The flag processor 102 determines whether the power supply has been activated and whether the channel has been changed (step S5).

If the power supply has been activated or if the channel has been changed (Yes in step S5), the flag processor 102 performs a first judgement process to determine whether or not guide information for the program is to be generated by the device (step S10).

If the power supply has not been newly activated, i.e, the power supply is on, and the channel has not been changed (No in step S5), then the flag processor 102 determines whether or not an interval preceding a change of program (e.g., one minute before program change) has been reached (step S15). The time interval is termed the confirmation interval.

If the confirmation interval has been reached (Yes in step S15), the flag processor 102 performs a second judgement process to determine whether or not guide information for the program is to be generated by the receiving device (step S20).

If the confirmation interval has not been reached (No in step S15), then after the first judgement process and the second judgement process have completed, the process returns to step S5.

### (3) First Judgement Process

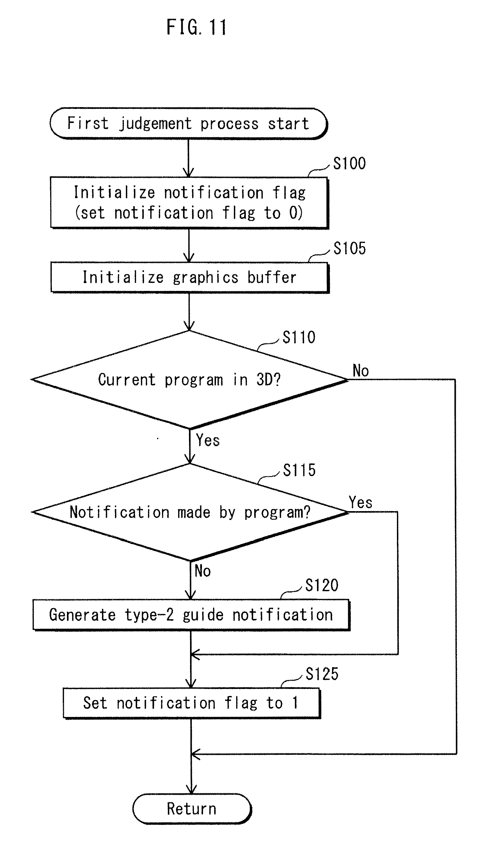

The first judgement process from step S10 of Fig. 10 is described below with reference to the flowchart shown in Fig. 11.

The flag processor 102 initializes the notification flag (step S100). Specifically, the flag processor 102 sets the notification flag to 0.

The flag processor 102 initializes the graphics buffer 107 (step S105). Specifically, the flag processor 102 empties the graphics buffer 107 so that nothing is written thereto.

The flag processor 102 determines whether or not the current program is in 3D using the corresponding EIT (step S110). Specifically, the flag processor 102 determines whether or not the value of the 3D program ID flag in the corresponding EIT has been set.

If the current program is in 3D, i.e., if the 3D program ID flag in the corresponding EIT has been set (Yes in step S110), then the flag processor 102 determines whether or not a type-1 guide notification is being made by the program (step S115). Specifically, the flag processor 102 determines whether the value of the 3D program ID flag included in the corresponding EIT is set to 0x20 or to 0x21.

If no type-1 guide notification is being made by the program, i.e., if the 3D program ID flag is set to 0x20 (No in step S115), then the guide information generator 106 generates a type-2 guide notification for storage in the first area of the graphics buffer 107 (step S120).

If a type-1 guide notification is made by the program, i.e., if the 3D program ID flag is set to 0x21 (Yes in step 115), or once the guide information generator 106 has generated a type-2 guide notification, then the flag processor 102 sets the value of the notification flag to 1 (step S125).

### (4) Second Judgement Process

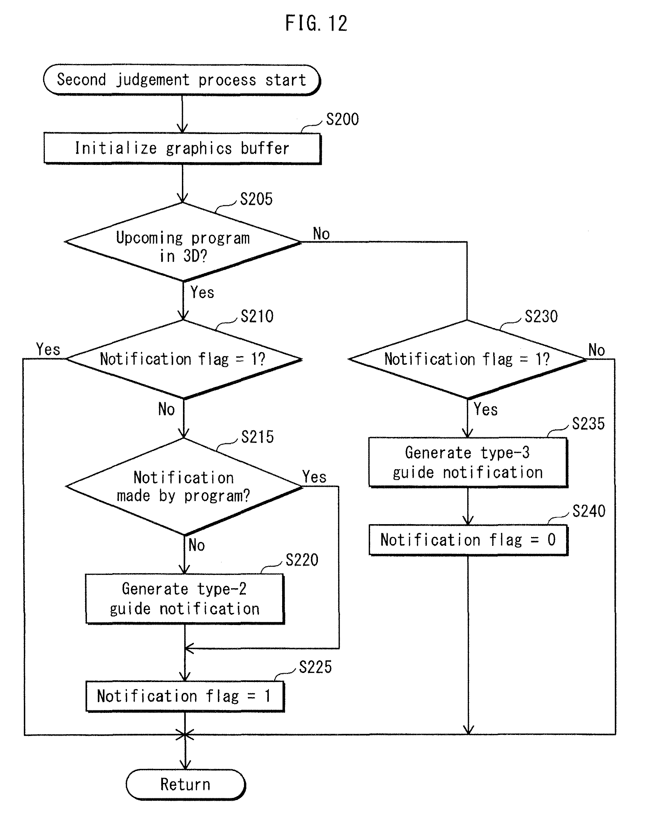

The second judgement process from step S20 of Fig. 10 is described below with reference to the flowchart shown in Fig. 12.

The flag processor 102 initializes the graphics buffer 107 (step S200). Specifically, the flag processor 102 empties the graphics buffer 107 so that nothing is written thereto.

The flag processor 102 determines whether or not the upcoming program is in 3D using the corresponding EIT (step S205). Specifically, the flag processor 102 determines whether or not the value of the 3D program ID flag in the corresponding EIT has been set.

If the upcoming program is in 3D, i.e., if the 3D program ID flag in the corresponding EIT has been set (Yes in step S205), then the flag processor 102 determines whether or not the value of the notification flag is 1 (step S210).

If the value is not I (No in step S210), then the flag processor 102 determines whether or not a type-1 guide notification is being made by the program (step S215). Specifically, the flag processor 102 determines whether the value of the 3D program ID flag included in the corresponding EIT is set to 0x20 or to 0x21.

If no type-1 guide notification is being made by the program, i.e., if the 3D program ID flag is set to 0x20 (No in step S215), then the guide information generator 106 generates a type-2 guide notification for storage in the first area of the graphics buffer 107 (step S220).

If a type-1 guide notification is being made by the program, i.e., if the 3D program ID flag is set to 0x21 (Yes in step 215), or once the guide information generator 106 has generated a type-2 guide notification, then the flag processor 102 sets the value of the notification flag to 1 (step S225).

If the upcoming program is in 2D, i.e., if the 3D program ID flag in the corresponding EIT has not been set (No in step S205), then the flag processor 102 determines whether or not the value of the notification flag is I (step S230).

If the value is 1 (Yes in step S230), then the guide information generator 106 generates a type-3 guide notification for storage in the second area of the graphics buffer 107 (step S235).

Once the guide information generator 106 generates the type-3 guide notification, the flag processor 102 changes the value of the notification flag to 0 (step S240).

### (5) Buffer Writing Process

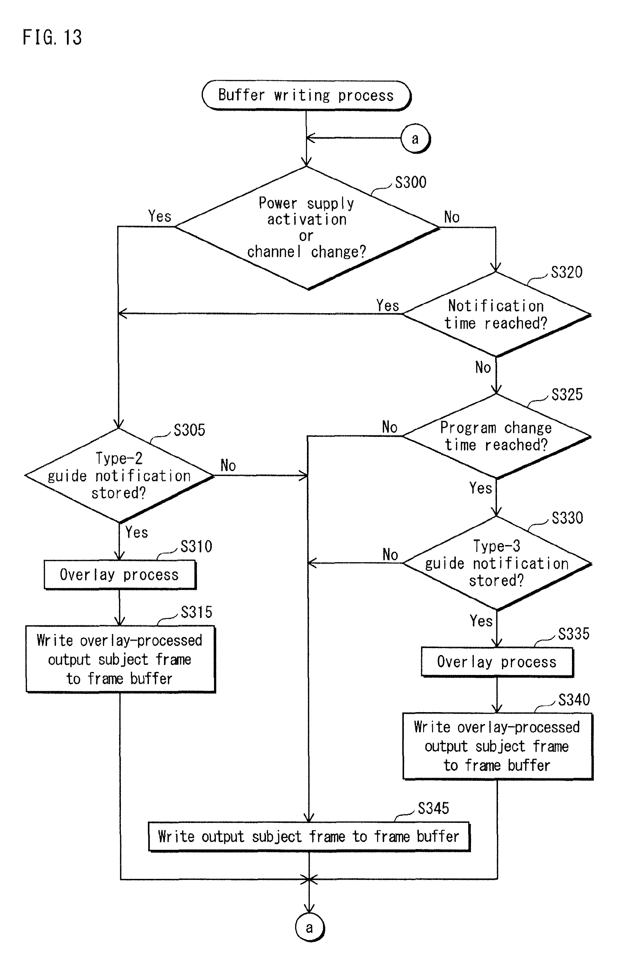

The process of writing the frames generated and output according to the presence or absence of the type-2 guide notification and of the type-3 guide notification to the frame buffer 162 is described below with reference to the flowchart shown in Fig. 13.

The video processor 161 determines whether the power supply has been activated and whether the channel has been changed (step S300).

If the power supply has been activated or if the channel has been changed (Yes in step S300), the video processor 161 determines whether or not a type-2 guide notification is stored in the first area of the graphics buffer 107 (step S305).

If the determination is affirmative (Yes in step S305), then the video processor 161 executes overlay processing of the type-2 guide notification stored in the first area on the output subject frame (step S310), and then writes the result to a predetermined buffer within the frame buffer 162 (step S315).

If the power supply has not been newly activated, i.e, the power supply is on, and the channel has not been changed (No in step S300), then the video processor 161 determines whether or not the time at which the guide information notification is to be made (e.g., 30 seconds before program change) for the upcoming program has been reached (step S320). The guide information notification time for the upcoming program is called the notification time.

If the notification time has been reached (Yes in step 320), the process advances to step S305.

If the notification time has not been reached (No in step S320), then the video processor 161 determines whether or not the program change time has been reached (step S325).

If the program change time has been reached (Yes in step S325), the video processor 161 determines whether or not a type-3 guide notification is stored in the second area of the graphics buffer 107 (step S330).

If the determination is affirmative (Yes in step S330), then the video processor 161 executes overlay processing of the type-3 guide notification stored in the second area on the output subject frame (step S335), and then writes the result to a predetermined buffer within the frame buffer 162 (step S340).

If no type-2 guide notification is stored in the first area of the graphics buffer 107 (No in step S305), or if the program change time has not been reached (No in step S325), or if no type-3 guide notification is stored in the second area of the graphics buffer 107 (No in step S330), then the video processor 161 writes the output subject frame to the frame buffer 162 (step S345).

When the frame on which the overlay process is being applied is part of a 3D video, the 3D video frame stored in the frame buffer 104 is split into two halves and expanded, an L-picture and an R-picture are generated therefrom, and the overlay process is applied to the frames made up of each of the two pictures. As described above, the overlay processing involves, for example, overlaying the type-2 guide notification or the type-3 guide notification on the frames displayed for a five-second interval.

### 1.4 Variations

The above explanations are given in accordance with Embodiment 1. However, the present invention is not limited as such. For example, the following variations are also possible.

(1) In the above-described Embodiment, the digital television 100 processes the type-2 guide notification or the type-3 guide notification for display as overlaid on the output subject frame. However, the present invention is not limited as such.

The digital television 100 may instead output the content of the type-2 guide notification or the type-3 guide notification as a single frame, replacing the output subject frame (video from a 2D or 3D program).

Alternatively, the digital television 100 may display the type-2 guide notification or the type-3 guide notification as subtitles.

Furthermore, the digital television 100 may use an audio notification unaccompanied by a display.

Alternatively, the content of the type-2 guide notification or the type-3 guide notification may be transmitted to a portable terminal (portable computer, mobile phone, or similar) capable of communicating with the digital television 100 for display thereon.

When subtitles or a data broadcast are displayed, the separate data thereof are received as multiplexed with the video stream. The digital television 100 may also constantly display a type-1 guide notification (information on the subtitle or data broadcast format) for the demultiplexed current program if the value of the 3D program ID flag is 0x21 when the channel is changed or when the power supply is activated.

(2) The display format of the type-1 guide notification is not specified in the above-described Embodiment. Any format may be used, as long as the user is effectively prompted to have the 3D glasses ready.

For example, video, audio, or a combination thereof may be used to notify the user. Alternatively, the notification may be made with subtitles, or through a data broadcast. Also, the content of the type-1 guide notification may be transmitted to a portable terminal (portable computer, mobile phone, or similar) capable of communicating with the digital television 100 for display thereon.

### (3) In the above-described Embodiment, the EIT may set a display duration for a type-1 guide notification.

For example, the EIT may set a display start time stamp and a display end time stamp defining the display of the type-1 guide notification. These time stamps may be absolute times, or may be relative times given with reference to the program start time stamp. Accordingly, the display interval can be set for each program.

An example is given below, in which the display of a type-2 guide notification is determined.

A determination regarding the display of a type-2 guide notification for the upcoming program is made in the manner explained in the above-described Embodiment. However, the determination made when the channel is changed and when the power supply is activated, i.e., the first judgement process, differs from that described above.

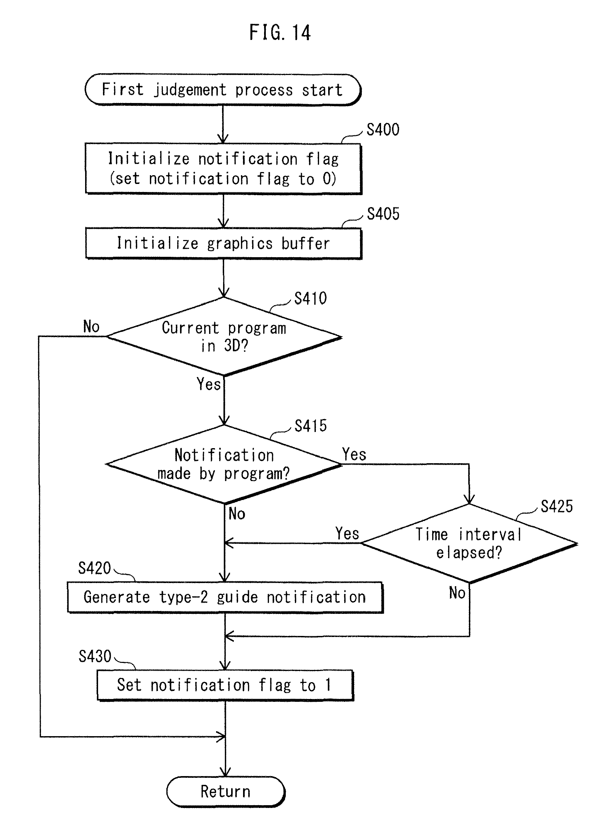

The first judgement process for the present variation is described below with reference to the flowchart shown in Fig. 14.

The process of steps S400 through S415 is identical to that of steps S100 through S115 of Fig. 11. Thus, the following explanation begins with the determination results obtained in step S415.

If no type-1 guide notification is being made by the program, i.e., if the 3D program ID flag is set to 0x20 (No in step S415), then the guide information generator 106 generates a type-2 guide notification for storage in the first area of the graphics buffer 107 (step S420).

If a type-1 guide notification is being made by the program, i.e., if the 3D program ID flag is set to 0x21 (Yes in step S415), then the flag processor 102 determines whether or not the time display interval defined by the display start time stamp and the display end time stamp in the EIT has elapsed (step S425).

If the display interval has elapsed (Yes in step S425), the process advances to step S420.

If the display interval has not elapsed (No in step S425), then once the type-2 guide notification is generated by the guide information generator 106 in step S420, the flag processor 102 changes the value of the notification flag to 1 (step S430).

(4) In the above-described Embodiment, the type-2 guide notification and the type-3 guide notification are only displayed once. However, the present invention is not limited as such.

The digital television 100 may constantly display the type-2 guide notification or the type-3 guide notification during the appropriate program.

Alternatively, the notification may be displayed periodically, several times over the course of one program. In such a case, the EIT sets several pairs of a display start time stamp and a display end time stamp defining the display of the type-1 guide notification. Alternatively, the device may store a display period in advance.

When multiple display periods, each made up of a pair of a display start time stamp and a display end time stamp, are set for the type-1 guide notification, the flag processor 102 may calculate the difference between the current time and the nearest subsequent display period and, when the difference is greater than a predetermined value, determine that the type-2 guide notification is to be generated. Here, the predetermined value is either a fixed value (such as five minutes) that does not depend on a first display interval for the type-1 guide notification, or a value that does depend on the first display interval, such as one-half or one-third the duration thereof.

(5) In the above-described Embodiment, a type-2 guide notification for the upcoming program is only displayed before the upcoming program start time. However, the present invention is not limited as such.

The guide information generator 106 may also generate the type-2 guide notification whenever the output subject frame changes from 2D to 3D during a single program, as per the results determined by the frame format determiner 103.

Also, the guide information generator 106 may generate the type-3 guide notification whenever the output subject frame changes from 3D to 2D during a single program, in accordance with the results determined by the frame format determiner 103.

In such a case, when the output subject frame changes from 2D to 3D, the video processor 161 executes overlay processing of the type-2 guide notification stored in the first area of the graphics buffer 107 onto the output subject frame. Also, when the output subject frame changes from 3D to 2D, the video processor 161 executes overlay processing of the type-3 guide notification stored in the second area of the graphics buffer 107 onto the output subject frame. Furthermore, the flag processor 102 sets the value of the notification flag to 1 when the guide information generator 106 has generated a type-2 guide notification, and to 0 when the guide information generator 106 has generated a type-3 guide notification.

(6) In the above-described Embodiment, the determination regarding a type-2 guide notification for the upcoming program is only made before program start (one minute before the start time). However, the invention is not limited as such.

An additional determination regarding the type-2 guide notification may also be performed after the start time (when the program begins). In such a case, the program for which the determination is being made is already playing. Thus, the EIT of the current program is used. Additionally, the notification made before program start (in this case, 30 seconds before) and the notification made at the program start time may differ in content. For example, the content for the former may be "Have your 3D glasses ready" while the latter may be "Put your 3D glasses on".

Furthermore, the determination regarding the type-2 guide notification may alternatively be performed only after the start time (when the program begins), rather than before.

(7) In the above-described Embodiment, the determination regarding the generation of a type-2 guide notification for the current program is made only when the channel is changed and when the power supply is activated. However, the invention is not limited as such.

Depending on the timing of channel changes and power supply activation, the flag processor 102 may instead perform the following determination for the current program. If, for example, the channel is changed or the power supply is activated with less than one minute remaining before the upcoming program begins, then the flag processor 102 makes a determination regarding the generation of the type-2 guide notification for the current program and for the upcoming program.

Also, depending on the timing of channel changes and power supply activation, the flag processor 102 may instead perform the determination for the upcoming program rather than the determination for the current program. If, for example, the channel is changed or the power supply is activated with less than one minute remaining before the upcoming program begins, then the flag processor 102 makes a determination regarding the generation of a type-2 guide notification for the upcoming program only.

(8) In the above-described Embodiment, once a type-2 guide notification is displayed, no other type-2 guide notification is generated as long as the channel is not changed and the programming on the channel currently being viewed does not change to 2D. This is the case regardless of the value of the 3D program ID flag. However, the invention is not limited as such.

When viewing continues after a type-2 guide notification has been displayed without the channel being changed and with subsequent programming remaining in 3D, then if no type-1 guide notification is being made, another type-2 guide notification may be made when later 3D programs begin. In such circumstances, the above-described notification flag is not needed.

In addition, if viewing continues for a predetermined time (e.g., three hours) without the channel being changed after the type-2 guide notification has been displayed, then another type-2 guide notification may be made according the results of a determination regarding the generation thereof for the upcoming program. In such circumstances, the flag processor 102 may, in addition to the above-described functions thereof, also be made capable of setting the notification flag to 0 when viewing of a single channel has continued for the predetermined time.

(9) In the above-described Embodiment, if the current program is in 3D when the channel is changed and when the power supply is activated, and a type-1 guide notification is being made, then the guide information generator 106 does not generate a type-2 guide notification. However, the invention is not limited as such.

When the channel is changed or the power supply is activated, if the program reception start time is more than a predetermined time (e.g., three minutes) after the current program start time, then the guide information generator 106 may generate a type-2 guide notification.

Alternatively, when the channel is changed or the power supply is activated, the guide information generator 106 may generate a type-2 guide notification whenever the current program is in 3D, regardless of the presence or absence of a type-1 guide notification.

(10) In the above-described Embodiment, the type-2 guide notification and the type-3 guide notification are displayed for five seconds. However, the present invention is not limited as such.

The display interval may also take some other value.

Alternatively, the type-2 guide notification and the type-3 guide notification may be displayed until a display end instruction is received through a user operation of a remote control, a button on the digital television 100, or similar. In such circumstances, the video processor 161 performs overlay processing until the display end instruction is received from the user.

Further, the digital television 100 may be made capable of detecting the fact that the user has put on the 3D glasses. The type-2 guide notification and type-3 guide notification may be displayed until such a detection is made.

In such circumstances, the 3D glasses may, for example, include a button pressed by the user upon putting on the 3D glasses. When pressed, the button causes the transmission of a wireless signal to the effect that the glasses are being worn. The detection function of the digital television 100 assures that the type-2 guide notification and the type-3 guide notification are displayed until the signal indicating that the 3D glasses are being worn is received. Alternatively, the 3D glasses may include a sensor that detects a portion of the face upon being put on. A wireless signal indicating that the 3D glasses have been put on may be transmitted once the sensor makes such a detection.

The detection function may also, for example, include a camera, and detect that the 3D glasses are being worn when the user's face is partially captured by the camera.

(11) In the above-described Embodiment, a determination regarding a type-2 guide notification for the current program is made upon the channel being changed. However, the invention is not limited as such.

A determination regarding the generation of a type-3 guide notification may be made in addition to the above-described determination.

The process of making such a determination is described below, with an emphasis on differences from the flowchart shown in Fig. 11.

Let the flag processor 102 contain program designation information indicating whether the program currently being output is in 3D or in 2D.

If, in the first judgement process shown in Fig. 11, the results of the determination indicated in step S110 indicate that the current program is not in 3D, i.e., that the program is in 2D (No in step S110), then the flag processor 102 determines whether or not the program designation information indicates a 3D program.

If the flag processor 102 program designation information indicates a 3D program, i.e., if the pre-channel change program was in 3D, then the guide information generator 106 generates a type-3 guide notification for storage in the graphics buffer 107. Afterward, the flag processor 102 updates the program designation information to correspond to the post-channel change program.

When the channel is changed, upon determining that no type-2 guide notification is stored in the first area of the graphics buffer 107, the video processor 161 determines whether or not a type-3 guide notification is stored in the second area of the graphics buffer 107, performs overlay processing in the affirmative case, and outputs the processed output subject frame to the frame buffer 162.

(12) In the above-described Embodiment, the 3D program 1D flag within the EIT (with a value of 0x20 or 0x21) is set to indicate that the program is in 3D. However, the 3D program ID flag may also have an additional value for 2D programs (set to 0x30 or 0x31). For example, 0x30 may indicate a 2D program, and 0x31 may indicate not only that a program is in 2D but also that information for a type-3 guide notification is included therein (hereinafter, a type-4 notification) for output.

In such circumstances, the flag processor 102 determines whether or not the current program and the upcoming program are in 2D or in 3D by verifying whether the first four bits of the 3D program ID flag indicate a value of 2 or 3.

Also, the flag processor 102 may determine whether the 3D program ID flag is set to 0x30 or 0x31, and have the guide information generator 106 generate a type-3 guide notification when the result is 0x30.

(13) In the above-described Embodiment, the 3D program ID flag indicates whether or not a notification is made at the beginning of the corresponding program. However, the invention is not limited as such.

The presence of notifications at other times, such as a notification included at the program end time to the effect that 3D programming is ending, may also be indicated. For example, possible values for the 3D program ID flag may include not only 0x20 and 0x21 but also 0x22 and 0x23. A value of 0x22 indicates that the corresponding program includes a notification at the program end time only, while a value of 0x23 indicates that the corresponding program includes notifications at the program start and at the program end times.

In such circumstances, the guide information generator 106 of the digital television 100 generates a type-2 guide notification but not a type-3 guide notification when the 3D program ID flag is set to 0x22. Also, when the value of the 3D program ID flag is 0x23, the guide information generator 106 generates neither a type-2 guide notification nor a type-3 guide notification.

(14) In the above-described Embodiment, when the channel is changed or the power supply is activated, the flag processor 102 immediately determines whether or not the current program is in 3D. However, the invention is not limited as such.

The flag processor 102 may also perform this determination after a predetermined interval has elapsed without the power supply being interrupted or the channel being changed. The above-described determination is considered unnecessary when the user is channel surfing and has not settled on a program for viewing. Therefore, the determination of whether or not the current program is in 3D is made only when the user is not channel surfing, i.e., when the user has settled on a program for viewing. This leads to a reduced processing load as unnecessary processing is not performed during channel surfing.

(15) In the above-described Embodiment, the digital television 100 outputs the 3D video by outputting the L-pictures and the R-pictures in alternation after displaying the type-1 guide notification or the type-2 guide notification. However, the invention is not limited as such. The digital television 100 may have the user select the viewing mode while displaying the type-1 guide notification or the type-2 guide notification. The viewing mode selection may involve, for example, selecting between stereoscopic or monoscopic video, or opting to view the frames as they are, before splitting into L-pictures and R-pictures.

When the viewer opts for 3D viewing, then the 3D video is displayed as described above, with the L-pictures and the R-pictures displayed in alternation. Having been described above, the details are here omitted.

When the viewer opts for 2D viewing, the video processor 161 splits the 3D video frames into two halves, expands one of the halves (into, for example, a video based on the L-pictures), and generates the output video (L-pictures) for writing to the first buffer 171. Alternatively, when the viewer opts for 2D viewing, the viewer 163 may output the picture written to the first buffer 171 (the L-picture) regardless of the results determined by the frame format determiner 103 and without changing the refresh rate, i.e., at 60 Hz.

When the viewer opts to view the frames as they are, the video processor 161 writes the 3D frames to the first buffer 171 in full, without splitting. Alternatively, when the user opts to view the frames as they are, the viewer 163 may output the video written to the first buffer 171 (the un-split picture) regardless of the results determined by the frame format determiner 103 and without changing the refresh rate, i.e., at 60 Hz.

(16) In the above-described Embodiment, the predetermined notification time at which the type-2 guide notification and the type-3 guide notification are displayed is 30 seconds before the upcoming program begins. However, the present invention is not limited as such.

The predetermined notification time may be any time before the upcoming program begins, provided that the determination regarding the generation of guide information for the program has been made.

Also, the predetermined notification time may be immediately after the upcoming program begins.

(17) In the above-described Embodiment, the value of the notification flag is used to determine whether or not to generate a type-3 guide notification for the upcoming program. However, the invention is not limited as such.

The determination may also be made using the 3D program ID flag included in the EIT corresponding to the current program.

In such circumstances, the flag processor 102 determines whether or not the value of the 3D program ID flag in the corresponding EIT has been set.

If the determination is negative, then the flag processor 102 concludes that the current program is in 2D. That is, the flag processor 102 determines that no type-3 guide notification is to be generated.

If the determination is affirmative, then the flag processor 102 concludes that the current program is in 3D, i.e., that a type-3 guide notification is to be generated. Upon identifying the need to generate the type-3 guide notification, the flag processor 102 sends second instruction information to the guide information generator 106 and changes the value of the notification flag to 0.

(18) In the above-described Embodiment, the value of the 3D program ID flag is set to either 0x20 or to 0x21. However, the invention is not limited as such.

The value of the 3D program ID flag may be set to any value as long as this value can be distinguished from other information within the EIT, and particularly from information in the content descriptor.

(19) The above-described Embodiment and variations may be freely combined.

### 1.5 Specific Examples

Specific examples are given below, illustrating the output of each type of guide information.

### (1) Upcoming Program Determinations

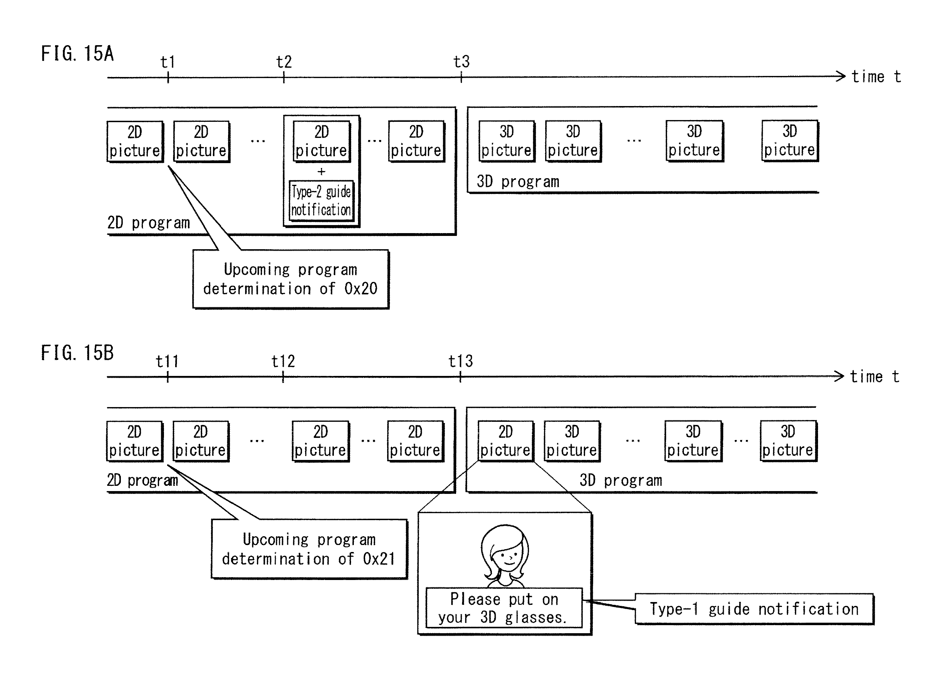

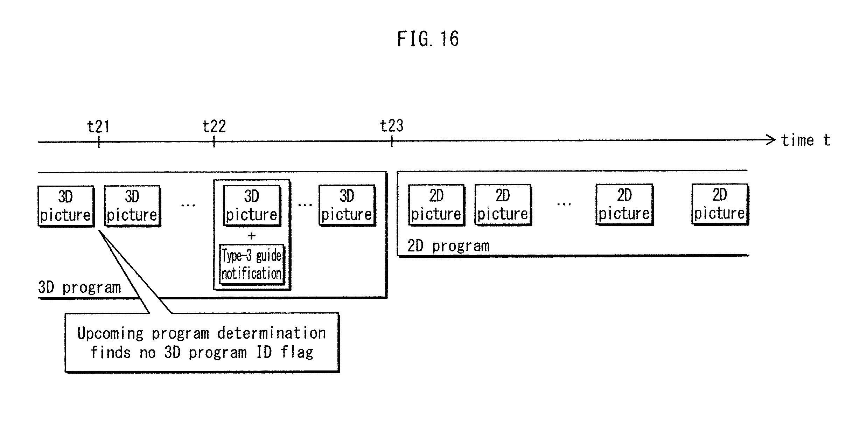

Specific example of determinations made for the upcoming program are given below with reference to Figs. 15A, 15B, and 16.

As shown in Figs. 15A and 15B, programming changes from 2D to 3D occur at times t3 and t13. Also, as shown in Fig. 16, a programming change from 3D to 2D occurs at time t23.

### (1-1) Displaying a Type-2 Guide Notification

As shown in Fig. 15A, at time t1 (one minute before time t3), the flag processor 102 uses the 3D program ID flag in the EIT corresponding to the upcoming program to determine whether the program is in 3D and, if so, whether or not a type-1 guide notification is to be made thereby. Here, the 3D program ID flag has been set to the value 0x20. Thus, the flag processor 102 determines that the upcoming program is in 3D and that no type-1 guide notification is being made thereby.

Given the results determined by the flag processor 102, the guide information generator 106 generates a type-2 guide notification. Then, at time t2 (30 seconds before time t3), the video processor 161 overlays the type-2 guide notification so generated on the output subject video frame for output to the viewer 163. For convenience, Fig. 15A indicates that the type-2 guide notification is overlaid on only one frame. However, as described above, the type-2 guide notification is actually overlaid on all frames displayed for a five-second interval beginning at time t2.

### (1-2) Displaying a Type-1 Guide Notification

As shown in Fig. 15B, at time t11 (one minute before time t13), the flag processor 102 uses the 3D program ID flag in the EIT corresponding to the upcoming program to determine whether the program is in 3D and, if so, whether or not a type-1 guide notification is being made thereby. Here, the 3D program ID flag has been set to the value 0x21. Thus, the flag processor 102 determines that the upcoming program is in 3D and that a type-1 guide notification is being made thereby.

Given the results determined by the flag processor 102, the guide information generator 106 does not generate a type-2 guide notification. Then, at time t13, the video processor 161 outputs a video frame (a 2D video frame displaying the type-1 guide notification) to the viewer 163. Although Fig. 15B only indicates one 2D frame, a predetermined number of frames are actually output.

### (1-3) Displaying a Type-3 Guide Notification

As shown in Fig. 16, at time t21 (one minute before time t23), the flag processor 102 uses the 3D program ID flag in the EIT corresponding to the upcoming program to determine whether the program is in 3D and, if so, whether or not a type-1 guide notification is to be made thereby. Here, the 3D program ID flag has not been set. Therefore, the flag processor 102 determines that the upcoming program is in 2D.

Given the results determined by the flag processor 102, the guide information generator 106 generates a type-3 guide notification. Then, at time t22 (30 seconds before time t23), the video processor 161 overlays the type-3 guide notification so generated on the output subject video frame for output to the viewer 163. For convenience, Fig. 16 indicates that the type-3 guide notification is overlaid on only one frame. However, as described above, the type-3 guide notification is actually overlaid on all frames displayed for a five-second interval beginning at time t22.

### (2) Current Program Determinations

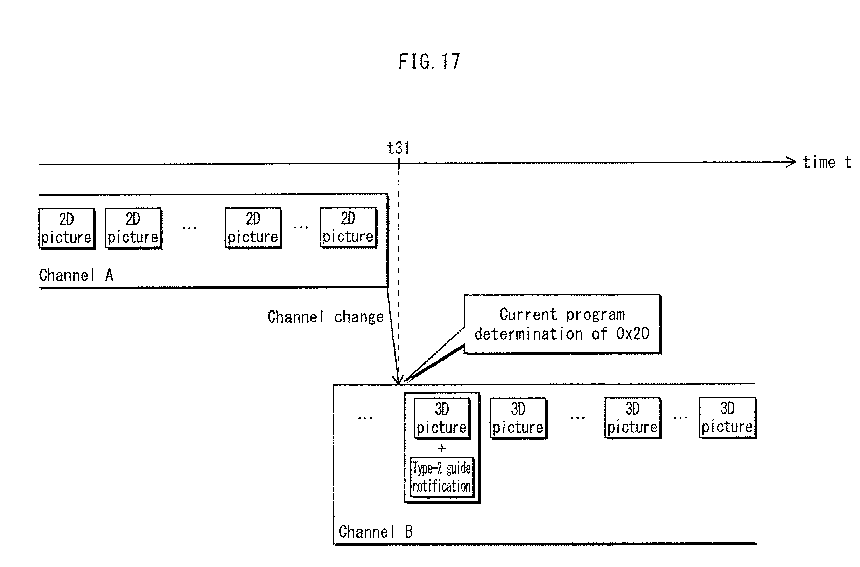

Specific examples of determinations made for the current program are given below with reference to Figs. 17, 18, and 19.

### (2-1) 3D Program ID Flag Only

As shown in Fig. 17, a change from channel A to channel B occurs at time t31.

Once the channel is changed at time t31, the flag processor 102 uses the 3D program ID flag in the EIT corresponding to the current program to determine whether the current program is in 3D, and if so, whether or not a type-1 guide notification is made thereby. Here, the 3D program ID flag has been set to the value 0x20. Thus, the flag processor 102 determines that the upcoming program is in 3D and that no type-1 guide notification is being made thereby.

Given the results determined by the flag processor 102, the guide information generator 106 generates a type-2 guide notification. Then, the video processor 161 overlays the type-2 guide notification so generated on the output subject video frame for output to the viewer 163. For convenience, Fig. 17 indicates that the type-2 guide notification is overlaid on only one frame. However, as described above, the type-2 guide notification is actually overlaid on all frames displayed for a five-second interval beginning at time t31.

### (2-2) 3D Program ID Flag and Display Interval

Examples of guide information determinations being made using the 3D program ID flag and the display interval are described below. In one case, the display interval has elapsed, while in the other, the time interval has not yet elapsed.

### (After Display Interval)

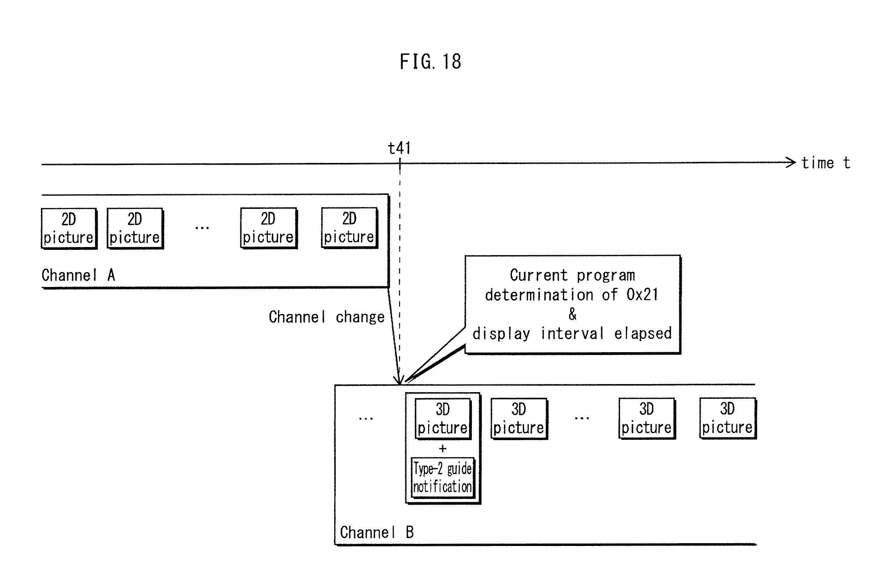

As shown in Fig. 18, a change from channel A to channel B occurs at time t41. Furthermore, time t41 is after the display interval for the type-1 guide notification corresponding to the 3D program being broadcast on channel B has elapsed.

As shown in Fig. 18, once the channel is changed at time t41, the flag processor 102 uses the 3D program ID flag in the EIT corresponding to the current program on channel B to determine whether the current program is in 3D, and if so, whether or not a type-1 guide notification is being made thereby. Here, the 3D program ID flag has been set to the value 0x21. Thus, the flag processor 102 determines that the upcoming program is in 3D, and that a type-1 guide notification is being made thereby, and then further determines whether or not the display interval for the type-1 guide notification has elapsed. Here, the flag processor 102 determines that the display interval has elapsed.

Given the results determined by the flag processor 102, the guide information generator 106 generates a type-2 guide notification. Then, the video processor 161 overlays the type-2 guide notification so generated on the output subject video frame for output to the viewer 163. For convenience, Fig. 18 indicates that the type-2 guide notification is overlaid on only one frame. However, as described above, the type-2 guide notification is actually overlaid on all frames displayed for a five-second interval beginning at time t41.

### (During Display Interval)

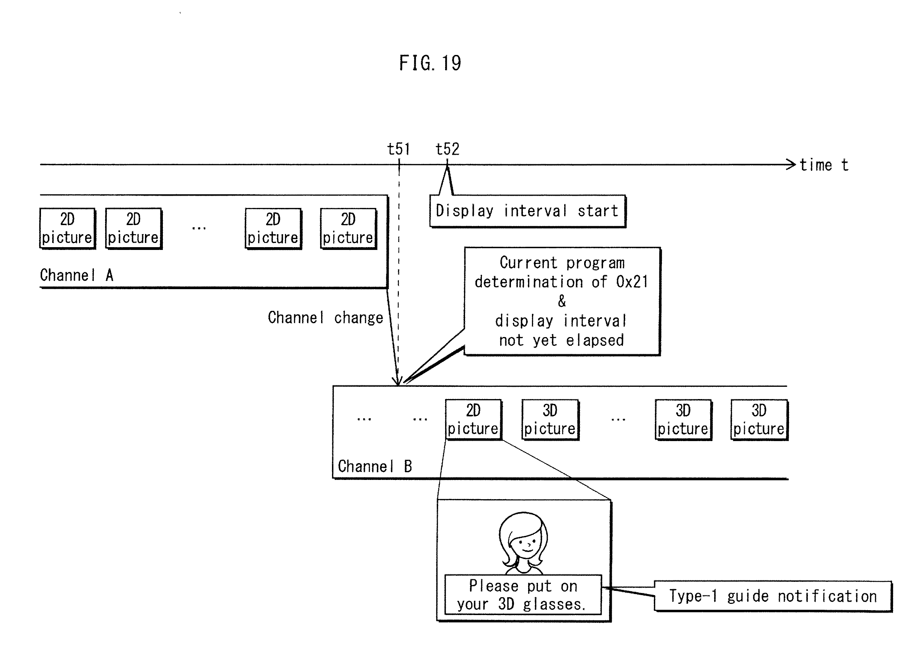

As shown in Fig. 19, a change from channel A to channel B occurs at time t51. Furthermore, time t51 is before the end of the display interval for the type-1 guide notification corresponding to the 3D program being broadcast on channel B.

As shown in Fig. 19, once the channel is changed at time t51, the flag processor 102 uses the 3D program ID flag in the EIT corresponding to the current program on channel B to determine whether the current program is in 3D, and if so, whether or not a type-1 guide notification is being made thereby. Here, the 3D program ID flag has been set to the value 0x21. Thus, the flag processor 102 determines that the upcoming program is in 3D, and that a type-1 guide notification is being made thereby, and then further determines whether or not the display interval for the type-1 guide notification has elapsed. Here, the flag processor 102 determines that the display interval has not yet elapsed.

Given the results determined by the flag processor 102, the guide information generator 106 does not generate a type-2 guide notification. Then, at time t52, the video processor 161 outputs a video frame (a 2D video frame displaying the type-1 guide notification) to the viewer 163. While Fig. 19 indicates only one 2D video frame being output, a number of 2D frames filling the display interval are actually output.

### (3) Program Viewing Mode Selection

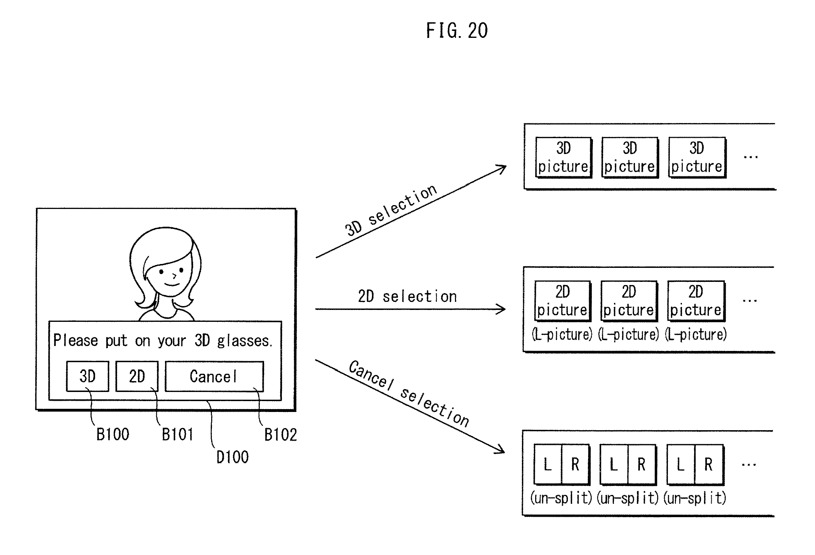

The selection of a program viewing mode is described using Fig. 20.

A first guide display is used in the explanation. The type-1 guide notification includes a message prompting the user to have the 3D glasses ready, a button B100 for selecting stereoscopic viewing, a button B101 for selecting monoscopic viewing, and a button B102 for opting to view the frames as they are, before division into L-pictures and R-pictures.

When the user presses button B 100 while the type-1 guide notification is displayed, i.e., when the user selects stereoscopic viewing, the digital television 100 displays the L-pictures and the R-pictures in alternation, as is typical for stereoscopic programming.

When the user presses button B101, i.e., chooses to view a 3D program in 2D, the digital television 100 displays, for example, frames made from the L-pictures only. The digital television 100 may, of course, instead display frames made from the R-pictures.

When the user presses button B102, i.e., chooses to view the frames as they are before splitting, the digital television 100 displays the un-split frames, for example in the Side-by-Side format.

### 2. Embodiment 2

Embodiment 1, described above, explains the use of a 3D program ID flag for programs broadcast through broadcast waves or through an IP network. The present Embodiment describes a 3D program ID flag used for recorded programming.

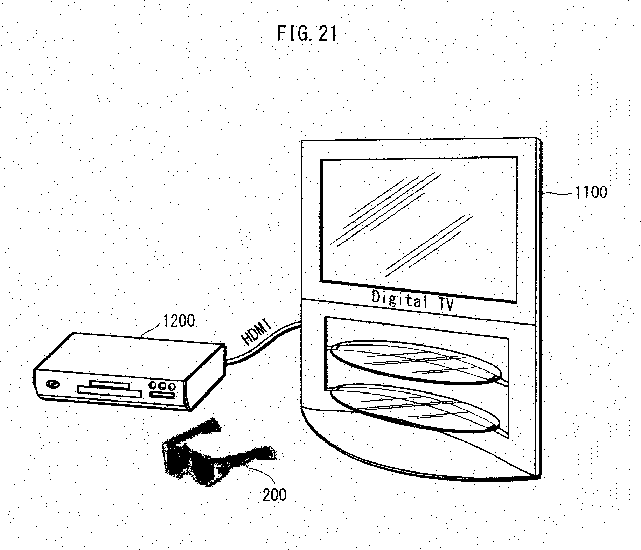

As shown in Fig. 21, a digital television 1100 is connected to a playback device 1200 through a HDMI (High-Definition Multimedia Interface). Accordingly, the digital television 1100 can display 3D video when, for example, the playback device 1200 plays back a recorded 3D program. Here, the playback device and the digital television jointly make up the video processing device.

### 2.1 Playback Device 1200 Configuration

The functions pertaining to recorded program (content) playback are described below.

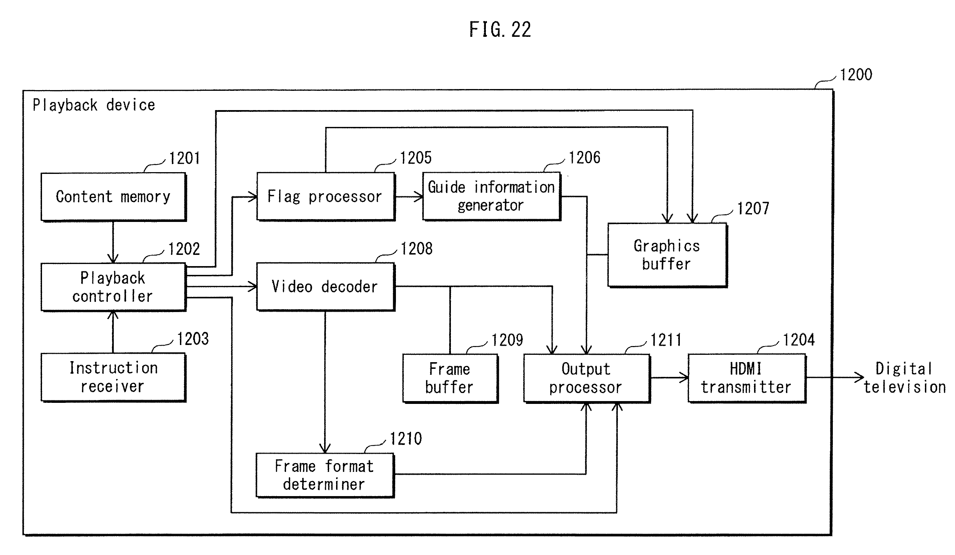

As shown in Fig. 22, the playback device 1200 includes a content memory 1201, a playback controller 1202, an instruction receiver 1203, an HDMI transmitter 1204, a flag processor 1205, a guide information generator 1206, a graphics buffer 1207, a video decoder 1208, a frame buffer 1209, a frame format determiner 1210, and an output processor 1211.

### (1) Content Memory 1201

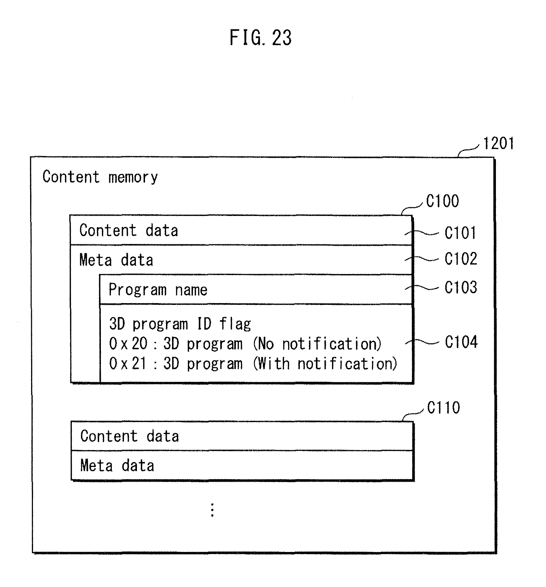

As shown in Fig. 23, the content memory 1201 stores multiple units of content data (streams for the recorded program) paired with meta data (file attribute information). Here, the content memory 1201 may be internal to the playback device 1200, or may be an SD card or a similar removable recording medium.

The meta data follows, for example, the ETSI TS 102 822 (TV Anytime) standard, indicates the name of the recorded program, and includes a 3D program ID flag. In the present Embodiment, the ETSI TS 102 822 AV Attribute field is expanded and the 3D program ID flag is added thereto. Much like in Embodiment 1, the 3D program ID flag is set to either 0x20 or 0x21 when the corresponding program is in 3D, and is not set at all when the corresponding program is in 2D. The AV Attribute field that contains the 3D program ID flag is generated and stored when the program is recorded.

### (2) Playback Controller 1202

The playback controller 1202 controls the playback of content (programs) stored in the content memory 1201.

Upon receiving a list display request from the instruction receiver 1203 requesting that a list of program names be displayed, the playback controller 1202 obtains the program names from the meta data for each program stored in the content memory 1201. The playback controller 1202 generates a list from the program names so obtained, and then writes the list so generated to the graphics buffer 1207. The playback controller 1202 also outputs an output instruction to the output processor 1211 to have the list displayed.

Upon receiving a selection instruction from the instruction receiver 1203 indicating a selection of one program from the displayed list, the playback controller 1202 obtains the meta data corresponding to the name of the selected program indicated by the received selection instruction for output to the flag processor 1205.

Afterward, the playback controller 1202 outputs the content data (stream) corresponding to the program name to the video decoder 1208.

### (3) Flag Processor 1205

Upon receiving the meta data for the content to be played back from the playback controller 1202, the flag processor 1205 initializes the graphics buffer 1207. Also, the flag processor 1205 determines whether the content to be played back is in 2D or in 3D according to the content of the meta data so received, and, in the latter case, makes a further determination as to whether or not a type-1 guide notification is being made thereby.

Specifically, the flag processor 1205 first determines whether or not the value of the 3D program ID flag in the received meta data has been set.

If so, i.e., if the content to be played back is in 3D, then the flag processor 1205 determines whether or not a type-2 guide notification is to be generated according to the value of the 3D program ID flag. Specifically, when the value of the 3D program ID flag is set to 0x20, the flag processor 1205 determines that the content is in 3D and that no type-1 guide notification is being output, and thus that a type-2 guide notification is to be generated. Then, the flag processor 1205 sends first instruction information to the guide information generator 1206 indicating that the type-2 guide notification is to be generated. Alternatively, when the value of the 3D program ID flag is set to 0x21, the flag processor 1205 determines that the content is in 3D, and that a type-1 guide notification is being output, and thus that no type-2 guide notification is to be generated.

### (4) Guide Information Generator 1206

The guide information generator 1206 is identical to the guide information generator 106 described in Embodiment 1. Explanations thereof are thus omitted.

### (5) Graphics Buffer 1207

The graphics buffer 1207 includes an area similar to that of the graphics buffer 107 described in Embodiment 1, with the addition of an area for storing the list of program names generated by the playback controller 1202.

### (6) Video Decoder 1208

Upon receiving the content data (stream) to be played back from the playback controller 1202, the video decoder 1208 decodes the received content data and extracts the 3D video information contained in each frame of the video stream. The video decoder 1208 generates video one frame at a time. When 3D video frames are being processed, frames that are in the Side-by-Side format are not divided into L-pictures and R-pictures.

The video decoder 1208 stores the decoded video stream in the frame buffer 1209 and outputs the extracted 3D video information to the frame format determiner 1210.

### (7) Frame Buffer 1209

The frame buffer 1209 is identical to the frame buffer 104 described in Embodiment 1. Explanations thereof are thus omitted.

### (8) Frame Format Determiner 1210

Upon receiving the 3D video information from the video decoder 1208, the frame format determiner 1210 uses the value thereof to determine whether the decoded frames are for 2D or 3D video and, for 3D video, also identifies the format as Side-by-Side or other.

### (9) Output Processor 1211

The output processor 1211 reads out the frame stored in the frame buffer 1209.

Depending on the results determined by the frame format determiner 1210, the output processor 1211 then adds an HDMI VSI (Vendor Specific InfoFrame) to the video information, which indicates whether the frame is for 2D video or 3D video, and in the latter case, whether the frames included therein are in Side-by-Side format, and then extracts the result and the read-out frame to the digital television 1100 through the HDMI transmitter 1204.

Also, if a type-2 guide notification has been generated by the guide information generator 1206 when content playback begins, the output processor 1211 executes overlay processing of the type-2 guide notification contained in the graphics buffer 107 onto the processing subject frame, then outputs the resulting frame and the HDMI VSI added to the video information to the digital television 1100 through the HDMI transmitter 1204.

As explained in Embodiment 1, the overlay processing executed when content is played back involves overlaying the type-2 guide notification on all frames to be displayed over a five-second period, for example. Thus, the type-2 guide notification is displayed with the subject frames for five seconds.

Also, when overlay processing is performed, the leading frame of the content may be a 3D image, or the content may change from 2D to 3D during the five-second interval following playback start. The output processor 1211 determines whether the overlay process subject frame is in 2D or 3D according to the results determined by the frame format determiner 1210. If the frame is for 2D video, then the output processor 1211 executes overlay processing with the type-2 guide notification as-is. However, if the frame is for 3D video, then the output processor 1211 reduces the size of the type-2 guide notification according to the format in use, Side-by-Side or other, and executes the overlay processing on each of the L-picture and the R-picture, before splitting.

Upon receiving the output instruction from the playback controller 1202, the output processor 1211 outputs the list of program names stored in the graphics buffer 1207 to the digital television 1100 through the HDMI transmitter 1204.

### (10) Instruction Receiver 1203

The instruction receiver 1203 receives playback-related instructions made by user operations. Specifically, the instruction receiver 1203 outputs a list display request to the playback controller 1202 upon receiving an instruction to the effect that a user operation requesting list display has been made. The instruction receiver 1203 also outputs a selection instruction to the playback controller 1202 upon receiving an instruction to the effect that a user operation selecting a particular program has been made.

### (11) HDMI Transmitter 1204

The HDMI transmitter 1204 transmits data output from the playback controller 1202 and the output processor 1211 (the video frames to be displayed and the HDMI VSI) to the digital television 1100 in accordance with the HDMI standard. As the HDMI standard is widely known, explanations thereof are here omitted.

### 2.2 Digital Television 1100 Configuration

The operation of the digital television 1100 displaying content played back by the playback device 1200 is described below. Components identical to the digital television 100 described in Embodiment 1 use the same reference symbols thereas and are here omitted.

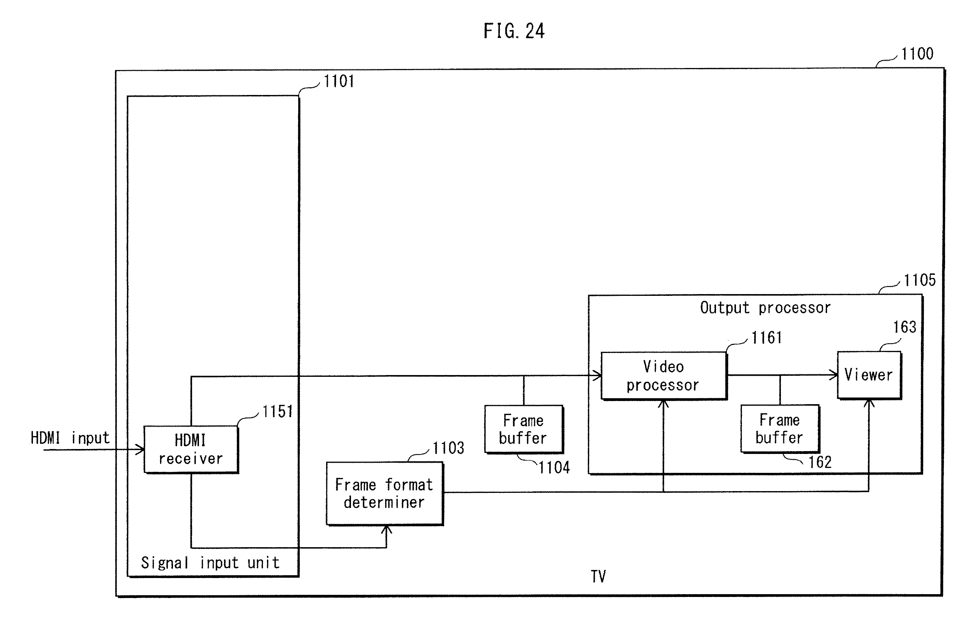

As shown in Fig. 24, the digital television 1100 includes a signal input unit 1101, a frame format determiner 1103, a frame buffer 104, and an output processor 1105.

The digital television 1100 also includes a non-diagrammed timekeeping unit, much like that of the digital television 100 described in Embodiment 1.

### (1) Signal Input Unit 1101

The signal input unit 1101 receives signals conforming to the HDMI standard output from the playback device 1200.

As shown in Fig. 24, the signal input unit 1101 includes an HDMI receiver 1151.

The HDMI receiver 1151 receives signals conforming to the HDMI standard. These include signals making up 2D or 3D video, as well as the HDMI VSI.

The HDMI receiver 1151 writes the 2D or 3D video so received to the frame buffer 1104. The HDMI receiver 1151 outputs the HDMI VSI so received to the frame format determiner 1103.

### (2) Frame Buffer 1104

The frame buffer 1104 is an area for storing frames received from the playback device 1200 (2D video, 3D video, or the list of program names).

### (3) Frame Format Determiner 1103

Upon receiving the HDMI VSI that includes the video information from the HDMI receiver 1151, the frame format determiner 1103 uses the video information in the HDMI VSI so received to determine whether the corresponding frame is for 2D or 3D video, and in the latter case, to determine whether the format in use is Side-by-Side or other.

The frame format determiner 1103 notifies the output processor 1105 of the determined results.

### (4) Output Processor 1105

The output processor 1105 outputs video in accordance with the refresh rate established for 2D video or for 3D video.

As shown in Fig. 24, the output processor 1105 includes a video processor 1161, a frame buffer 162, and a viewer 163.

All of these components, with the exception of the video processor 1161 have been described above in Embodiment 1. Therefore, the following describes the video processor 1161 only.

The video processor 1161 determines whether a subject video frame forms 2D or 3D video, and, for the latter, also identifies the format as Side-by-Side or other. These determinations are made using the results found by the frame format determiner 1103.

If the video is found to be in 3D, then the video processor 1161 splits the frame into two halves and expands the two halves, thus generating an L-picture and an R-picture. The video processor 1161 stores the generated L-picture in the L-video buffer 173 and the generated R-picture in the R-video buffer 174.

For non-3D video, i.e., 2D video, the video processor 1161 stores the frame (video) in the first buffer 171.

The process performed to display the list of program names is similar to that performed for 2D video display.

### 2.3 Operations

Playback operations for recorded programming (content) are explained below, emphasizing points of difference from the operations described in Embodiment 1.

### (1) Judgement Process at Playback Time

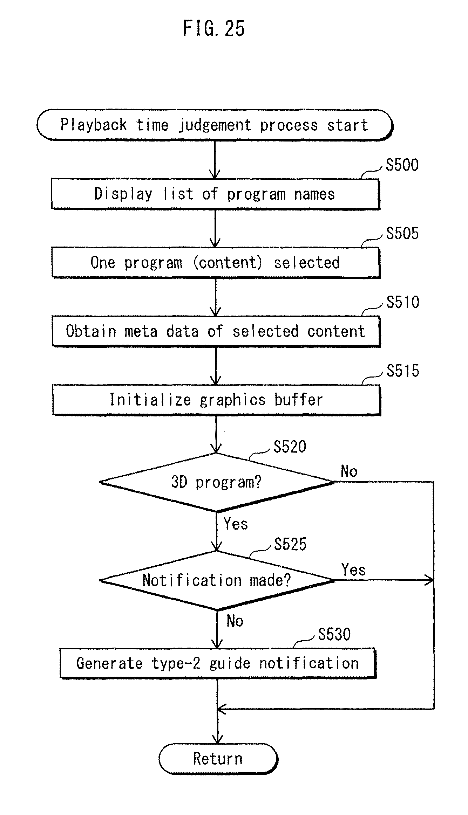

The judgement made at playback time regarding the need to generate a type-2 guide notification for the selection of content (the recorded program) to be played back or for the selected content is described with reference to the flowchart shown in Fig. 25.

Upon receiving a list display request made through a user operation, the playback controller 1202 of the playback device 1200 generates the list by obtaining the program names from the meta data stored in the content memory 1201. The digital television 1100 then displays the list of program names generated by the playback device 1200 (step S500).

Upon receiving a program selection made by the user from among the names in the displayed list (step S505), the playback controller 1202 obtains the meta data corresponding to the name of the selected program (step S510).

The flag processor 1205 initializes the graphics buffer 1207 upon receiving the meta data from the playback controller 1202 (step S515). The flag processor 1205 determines whether the content to be played back is a 2D program or a 3D program according to the content of the meta data so received, i.e., by determining whether or not the 3D program ID flag in the received meta data has been set (step S520).

In the affirmative case, i.e., if the content to be played back is in 3D (Yes in step S520), then the flag processor 1205 determines whether or not a type-2 guide notification is to be generated according to the value of the 3D program ID flag. Specifically, the flag processor 1205 determines whether the value of the notification flag is 0x20 or 0x21.

If the flag processor 1205 determines that the 3D program ID flag has been set to 0x20, i.e., that no type-1 guide notification is being output (No in step S525), then the guide information generator 1206 generates a type-2 guide notification (step S530).

The process ends when the flag processor 1205 determines that the 3D program ID flag in the received meta data has not been set, i.e., that the content to be played back is in 2D (No in step S520), or that the 3D program ID flag has been set to 0x21, i.e., that a type-1 guide notification is being output (Yes in step S525).

### (2) Playback Process

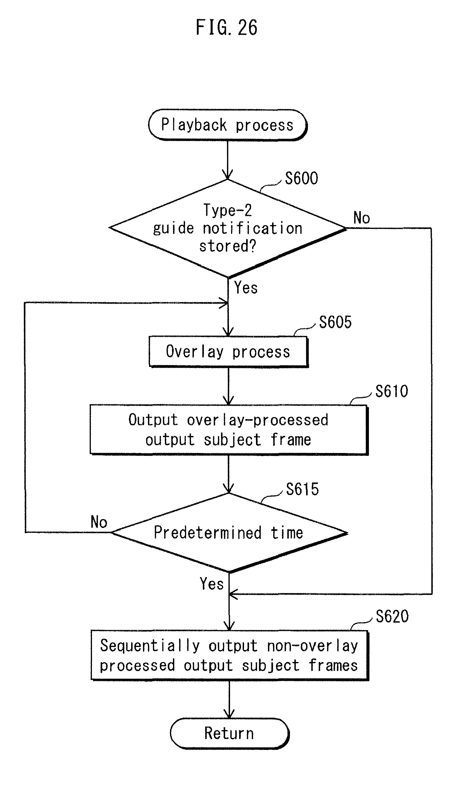

The operations pertaining to the playback of the selected content, performed after the above-described judgement process, is explained below with reference to the flowchart shown in Fig. 26.

When playback begins, the output processor 1211 determines whether or not a type-2 guide notification is stored in the graphics buffer 107 (step S600).

In the affirmative case (Yes in step S600), the output processor 1211 executes overlay processing of the type-2 guide notification stored in the graphics buffer 107 on the frame received from the video decoder 1208 (step S605). Specifically, the overlay processing executed by the output processor 1211 depends on whether the subject frame is a 2D picture or a 3D picture.

The output processor 1211 outputs the frame on which overlay processing has been executed to the digital television 1100 (step S610).

The output processor 1211 determines whether a predetermined period (here, five seconds) has elapsed since playback start (step S615).

In the negative case (No in step S615), the process returns to sep S605.

In the affirmative case (Yes in step S615), the output processor 1211 begins to output frames on which the overlay processing has not been executed to the digital television 1100 (step S620).

At this time, the viewer 163 of the digital television 1100 displays the frames output from the playback device 1200 at a refresh rate in accordance with results determined by the frame format determiner 1103. When the frames received from the playback device 1200 are in 3D, then the received frames are split into two images which are then magnified and used to generate the L-picture and the R-picture. For example, when 3D video is being generated from frames in the Side-by-Side format, each received frame is split into left and right halves, each of which is then expanded horizontally to obtain the L-picture and the R-picture.

### 2.4 Variations

The above explanations are given in accordance with Embodiment 2. However, the present invention is not limited as such. For example, the following variations are also possible.

(1) In the above-described Embodiment, the playback device 1200 processes the type-2 guide notification for display as overlaid on the output subject frame. However, the present invention is not limited as such.

The playback device 1200 may also output the content of the type-2 guide notification as a single-frame image rather than as overlaid on the output subject content frames.

Alternatively, the playback device 1200 may display the type-2 guide notification as subtitles.

Furthermore, the playback device 1200 may produce notifications as audio rather than video.

Also, the content of the type-2 guide notification may be transmitted to a portable terminal (portable computer, mobile phone, or similar) capable of communicating with the digital television 1200 for display thereon.

(2) The display format of the type-1 guide notification is not specified in the above-described Embodiment. Any format may be used, as long as the user is effectively prompted to have the 3D glasses ready.

For example, video, audio, or a combination thereof may be used to notify the user. Alternatively, the notification may be made with subtitles, or through a data broadcast. Also, the content of the type-1 guide notification may be transmitted to a portable terminal (portable computer, mobile phone, or similar) capable of communicating with the digital television 1200 for display thereon.

(3) In the above-described Embodiment, the type-2 guide notification is displayed for five seconds. However, the present invention is not limited as such.

The display interval may also take some other value.

Also, the type-2 guide notification display may be displayed until a display end instruction is received from the user. In such circumstances, the video processor 1161 performs overlay processing until the display end instruction is received from the user.

Alternatively, the playback device 1200 may display the type-2 guide notification until a detector mounted on the 3D glasses detects the fact that the user is wearing the 3D glasses. A specific example of this variation has been described above, and is thus omitted.

(4) In the above-described Embodiment, the digital television 1100 outputs 3D video, i.e., outputs the L-pictures and the R-pictures in alternation, after the playback device 1200 has output the type-1 guide notification or the type-2 guide notification thereto. However, the present invention is not limited as such. The playback device 1200 may have the user select the viewing mode while displaying the type-1 guide notification or the type-2 guide notification, before the 3D video is output to the digital television 1100. The viewing mode selection may involve, for example, selecting between stereoscopic or monoscopic video, or opting to view the frames as they are, before splitting into L-pictures and R-pictures.

The details of this selection have been described in the variations on Embodiment 1 given above and are thus omitted.

(6) In Embodiment 2 as described above, the digital television 1100 and the playback device 1200 are separate devices. However, the present invention is not limited as such.

The digital television 1100 and the playback device 1200 may be combined into a single device, such as a television with recording capabilities. In such a case, if the 3D program ID flag in the EIT corresponding to the program (content) has been set when the program is being recorded, the recording-capable television records the value of the 3D program ID flag as meta data and then records the meta data in association with the program onto a recording medium.

Accordingly, a function similar to that of the above-described Embodiment 2 can be applied not only to the content recorded in the content memory 1201 but also to the content recorded on the recording medium in a similar data format, as shown in Fig. 5.

(7) In Embodiment 2 as described above, the signal input unit 1101 of the digital television 1100 may be replaced by a signal input unit 101 described in Embodiment 1, having an HDMI receiver 1151 added thereto.

(8) The above-described Embodiment and variations may be freely combined.

### 2.5 Specific Examples

A specific example is given below, in which the output of each type of guide information during playback of recorded programming (content) is described.

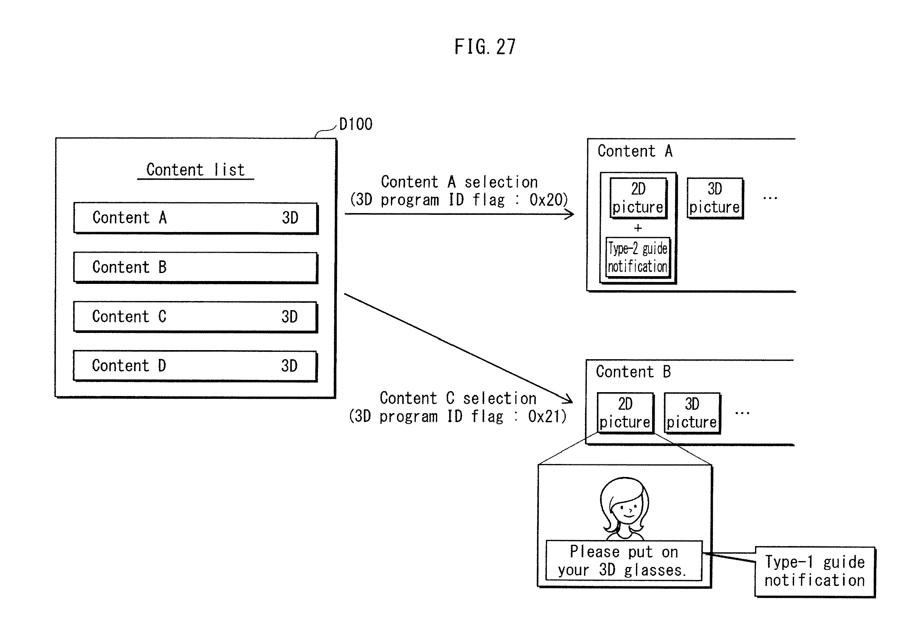

As shown in Fig. 27, the playback device 1200 displays a content list D100, which is a list of program names, through the digital television 1100.

Let content A, which is in 3D (has a 3D program ID flag set to 0x20) be selected at this point. Given that no type-1 guide notification is being made thereby, the digital television 1100 displays a type-2 guide notification as overlaid on the output subject frames (e.g., 2D frames) at the playback start time of the selected content A. For convenience, Fig. 27 indicates that the type-2 guide notification is overlaid on only one frame. However, as described above, the type-2 guide notification is actually overlaid on all frames displayed for a five-second interval beginning at playback start.

Alternatively, let content C, which is in 3D (has a 3D program ID flag set to 0x21) be selected. Given that a type-1 guide notification is being made thereby, the guide information generator 106 of the digital television 1100 does not generate a type-2 guide notification. Then, when playback begins, the digital television 1100 displays a video frame (a 2D video frame displaying the type-1 guide notification). While Fig. 27 indicates only one 2D video frame being output, a number of 2D frames filling the display interval are actually output.

### 3. Embodiment 3

In the above-described Embodiments, the 3D program ID flag is included in the SI, which is data separate from the stream that includes the frames. However, the present invention is not limited as such.

Here, the stream that includes the frames also includes the 3D program ID flag, as explained below.

### 3.1 Digital Television 2100 Configuration

The configuration of the digital television 2100 is described below as an example of a video processing device displaying 3D or 2D programming. Components identical to the digital television 100 described in Embodiment 1 use the same reference symbols thereas and are here omitted.

Specifically, the digital television 2100 is a plasma television receiving 2D video and 3D video delivered by digital broadcast waves (streams). Also, the digital television 2100 is connected to an IP network and to a playback device, and can display 2D and 3D video output therefrom.

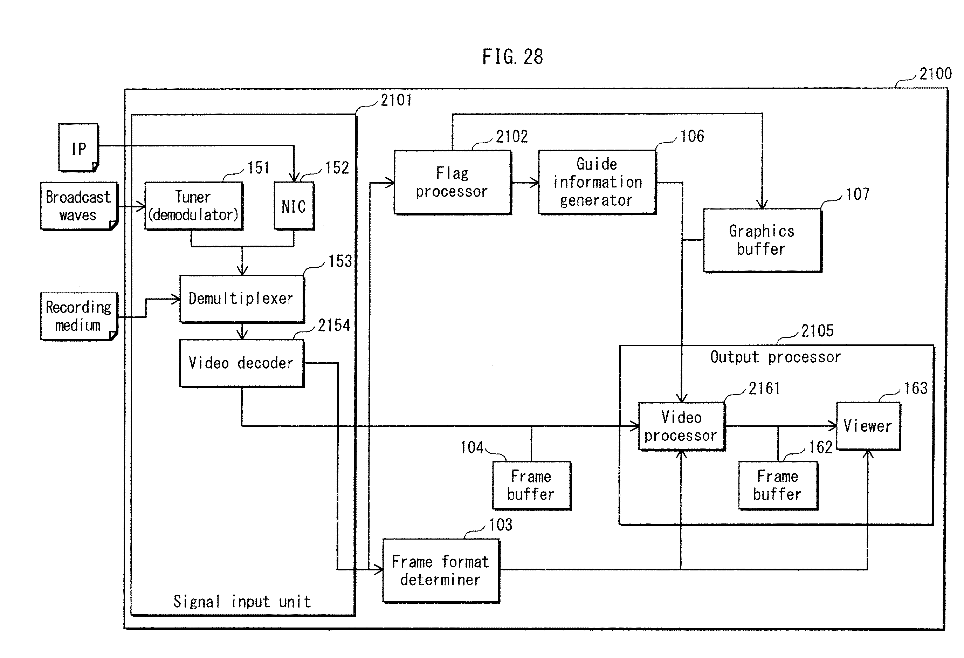

As shown in Fig. 28, the digital television 2100 includes a signal input unit 2101, a flag processor 2102, a frame format determiner 103, a frame buffer 104, an output processor 2105, a guide information generator 106, and a graphics buffer 107.

All components other than the signal input unit 2101, the flag processor 2102, and the output processor 2105 are identical to those of Embodiment 1. Thus, only the signal input unit 2101, the flag processor 2102, and the output processor 2105 are explained below.

The digital television 2100 also includes a non-diagrammed timekeeping unit, much like that described in Embodiment 1.

### (1) Signal Input Unit 2101

The signal input unit 2101 receives streams that are delivered (output) from an external source and that include frames making up 2D video as well as frames making up 3D video. Much like in Embodiment 1, the streams are video streams including frames that make up 2D or 3D video, multiplexed with SI. Audio, subtitle, and other multimedia streams, such as BML, may also be multiplexed, as required. The SI includes information regarding the program formed by the various multiplexed streams.

In this example, the delivered (output) 3D video frames in a 3D format, such as Side-by-Side, much like in Embodiment 1.

The signal format of the delivered (output) frames follows the H.264/MPEG4 AVC standard, as explained in Embodiment 1. In the present Embodiment, the signal format includes 3D video information similar to that of Embodiment 1 and stored in the SEI format. The SEI-format data also stores a 3D program ID flag. Much like in Embodiment 1, the 3D program ID flag can take a value of 0x20 or 0x21. The significance of these values is identical to Embodiment 1. The 3D program ID flag can be left unset to indicate that the program to which the frames belong is in 2D. The 3D program ID flag is stored as SEI-format data when the corresponding program is broadcast.

As shown in Fig. 28, the signal input unit 101 includes a tuner (demodulator) 151, a NIC (Network Interface Card) 152, a demultiplexer 153, and a video decoder 2154.

With the exception of the video decoder 2154, these components are identical to those described in Embodiment 1. Thus, only the video decoder 2154 is described below.

Upon receiving the 2D or 3D video stream from the demultiplexer 153, the video decoder 2154 decodes the received video stream and simultaneously obtains the SEI-format data contained in the individual video stream frames. The SEI-format data so obtained is output to the flag processor 2102, or to the frame format determiner 103 if 3D video information is included therein.

The video decoder 154 writes the individual video frames generated thereby to the frame buffer 104. Much like in Embodiment 1, when 3D video frames generated by the video decoder 154 are being processed, frames that are in the Side-by-Side format are not split into L-pictures and R-pictures.

### (2) Flag Processor 2102

The flag processor 2102 determines whether or not one of a type-2 guide notification and a type-3 guide notification is to be generated for the user.

The flag processor 2102 has a notification flag indicating whether or not a type-2 guide notification has been output. When initialized, the value (e.g., 0) of the flag indicates that no type-2 guide notification has been made. The notification flag value is set to 1 to indicate that a type-2 guide notification has been output.

The operations performed by the flag processor 2102 when the power supply is activated or when the channel is changed, and the operations performed when a change in programming occurs on a single channel, are explained below.

### (2-1) Power Supply Activation and Channel Change Operations

When the device power supply is activated, or when the channel is changed, the flag processor 2102 initializes the notification flag and the graphics buffer 107.

The flag processor 2102 determines whether the received frames belong to a 2D program or a 3D program according to the presence or absence of a 3D program ID flag included in the SEI-format data received from the video decoder 2154.

If the program is in 3D, the flag processor 2102 further determines whether or not to generate a type-2 guide notification according to the value of the 3D program ID flag included in the SEI-format data. Specifically, when the value of the 3D program ID flag included in the SEI-format data is set to 0x20, the flag processor 2102 determines that the current program is in 3D, and that a type-1 guide notification has not been output, and thus that type-2 guide notification is to be generated. Then, the flag processor 2102 sends first instruction information to the guide information generator 106 indicating that a type-2 guide notification is to be generated, and changes the value of the notification flag to 1. When the value of the 3D program ID flag is 0x21, the flag processor 2102 determines that the current program is in 3D and that a type-1 guide notification is being output, meaning that type-2 guide notification need not be generated. The flag processor 102 then changes the value of the notification flag 1.

### (2-2) Same-Channel Programming Change Operations

When a given channel changes from one program to another, the flag processor 2102 determines whether the other program is in 2D or 3D according to the presence or absence of a 3D program ID flag included in the SEI-format data received from the video decoder 2154. The timekeeping unit and the start time included in the EIT corresponding to the program are used to determine whether the program has changed. Again, the flag processor 2102 initializes the graphics buffer 107.

If the SEI-format 3D program ID flag corresponding to the other program has been set, then the flag processor 2102 determines that the other program is in 3D and further determines whether or not a type-2 guide notification is to be generated according to the value of the notification flag and the value to which the 3D program ID flag has been set. Specifically, when the 3D program ID flag included in the SEI-format data corresponding to the other program is set to 0x20 and the notification flag is set to 0, the flag processor 2102 determines that a type-2 guide notification is to be generated, and thus sends first instruction information to the guide information generator 106 and changes the value of the notification flag to 1.

When the flag processor 2102 determines that the 3D program ID flag included in the SEI corresponding to the other program has not been set, the other program is identified as being in 2D. When the other program is identified as being in 2D, the flag processor 2102 determines whether or not a type-3 guide notification is to be generated according to the value of the notification flag. The flag processor 2102 determines that no type-3 guide notification is to be generated when the notification flag is set to 0, and that a type-3 guide notification is to be generated when the notification flag is set to 1. Upon identifying the need to generate the type-3 guide notification, the flag processor 2102 sends second instruction information to the guide information generator 106 indicating that type-3 guide notification is to be generated, and changes the value of the notification flag to 0.

### (3) Output Processor 2105

The output processor 2105 outputs video in accordance with the refresh rate established for 2D video or for 3D video. Also, the output processor 2105 outputs the type-2 guide notification or the type-3 guide notification, if generated by the guide information generator 106, along with the video.

As shown in Fig. 28, the output processor 2105 includes a video processor 2161, a frame buffer 162, and a viewer 163.

The frame buffer 162 and the viewer 163 are identical to the components described for Embodiment 1. Thus, only the video processor 2161 is described below.

The video processor 2161 outputs the frame (video) stored in the frame buffer 104. If a type-2 guide notification has been generated by the guide information generator 106, then the video processor 2161 executes overlay processing of the type-2 guide notification on the video to be output, and then outputs the result.

The specific operation of the video processor 2161 is described below.

The video processor 2161 determines whether a subject video frame forms 2D or 3D video, and, for the latter, also identifies the format as Side-by-Side or other. These determinations are made using the results found by the frame format determiner 103.

If the video is found to be in 3D, then the video processor 2161 splits the frame into two halves and expands the two halves, thus generating an L-picture and an R-picture. The video processor 2161 stores the generated L-picture in the L-video buffer 173 and the generated R-picture in the R-video buffer 174.

For non-3D video, i.e., 2D video, the video processor 2161 stores the frame (video) in the first buffer 171.

Furthermore, if the guide information generator 106 generates a type-2 guide notification when the device power supply is activated and when the channel is changed, then the video processor 2161 executes overlay processing of the type-2 guide notification stored in the graphics buffer 107 on the subject frame (the L-picture and the R-picture), and then writes the result to the predetermined buffer within the second buffer 172.

If either one of the type-2 guide notification and the type-3 guide notification has been generated by the guide information generator 106 when the channel changes from one program to the other, then the video processor 2161 executes overlay processing of the guide notification stored in the graphics buffer 107 on the subject frame, and then writes the result to the appropriate buffer. For example, if a type-2 guide notification is stored in the first area of the graphics buffer 107 when the given channel changes from one program to the other, then the video processor 2161 executes overlay processing of the type-2 guide notification on the subject frame. Also, if a type-3 guide notification is stored in the second area of the graphics buffer 107 when the given channel changes from one program to the other, then the video processor 2161 executes overlay processing of the type-3 guide notification on the subject frame. The program change time is identified by the timekeeping unit using the start time included in the EIT corresponding to the subject program. The overlay processing involves, for example, overlaying the type-2 guide notification or the type-3 guide notification on the frames displayed for a five-second interval. Thus, the type-2 guide notification or the type-3 guide notification is displayed with the subject frames for five seconds.

### 3.2 Operations

The operations of the digital television 2100 pertaining to the display of each type of guide information are described below.

### (1) Outline

The outline of the process of determining whether or not the guide information is to be generated by the device itself is described below, emphasizing the point of difference from the flowchart shown in Fig. 10.

The point of difference from the flowchart shown in Fig. 10 is step S 15.

In step S15 of Fig. 10, the flag processor 102 of Embodiment 1 determines whether or not the current time is within an interval preceding a change of program. Here, step S15 instead involves the flag processor 2102 determining whether or not the program change time for the channel has been reached.

### (2) First Judgement Process

The first judgement process of the present Embodiment is identical to that described for Embodiment 1 using Fig. 11, and is thus omitted.

### (3) Second Judgement Process

The second judgement process of the present Embodiment is similar to that shown in Fig. 12, with the only difference being that the subsequent program is replaced by the other program.

### (4) Buffer Writing Process

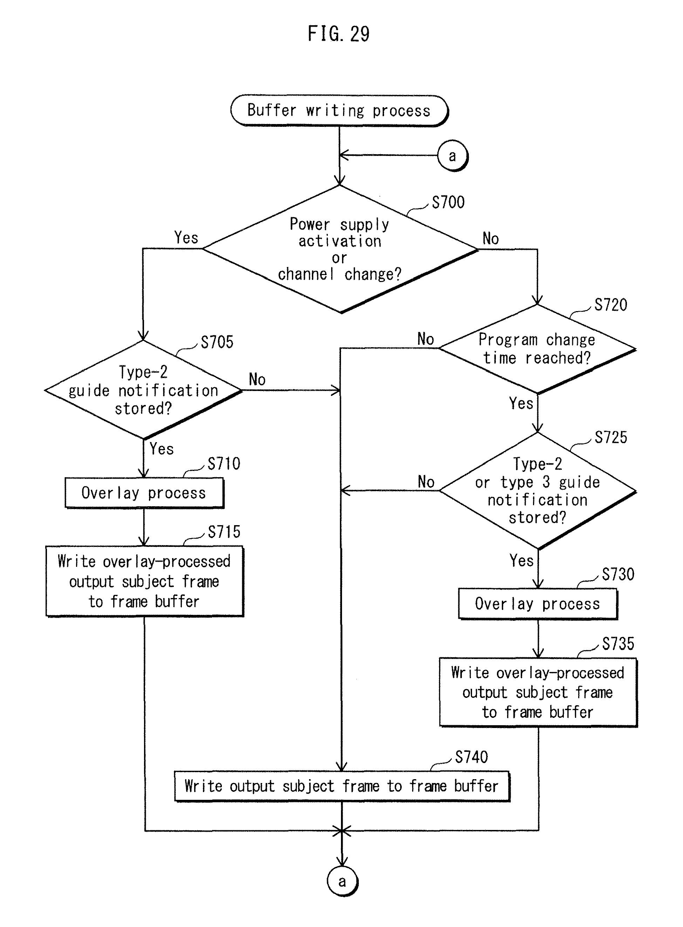

The process of writing the frames generated and output according to the presence or absence of the type-2 guide notification and of the type-3 guide notification to the frame buffer 162 is described below with reference to the flowchart shown in Fig. 29.

The video processor 2161 determines whether the power supply has been activated and whether the channel has been changed (step S700).

If the power supply has been activated or if the channel has been changed (Yes in step S700), the video processor 2161 determines whether or not a type-2 guide notification is stored in the first area of the graphics buffer 107 (step S705).

If the determination is affirmative (Yes in step S705), then the video processor 2161 executes overlay processing of the type-2 guide notification stored in the first area on the output subject frame (step S710), and then writes the result to a predetermined buffer within the frame buffer 162 (step S715).

If the power supply has not been newly activated, i.e, the power supply is on, and the channel has not been changed (No in step S700), then the video processor 2161 determines whether or not the program change time for the given channel has been reached (step S720).

If the program change time has been reached (Yes in step S720), the video processor 2161 determines whether a type-2 guide notification or a type-3 guide notification is stored in the graphics buffer 107 (step S725).

If the determination is affirmative (Yes in step S725), then the video processor 2161 executes overlay processing of the guide information stored in the graphics buffer 107 on the output subject frame (step S730), and then writes the result to a predetermined buffer within the frame buffer 162 (step S735).

If no type-2 guide notification is stored in the graphics buffer 107 (No in step S705), or if the program change time has not been reached (No in step S720), or if neither a type-2 guide notification nor a type-3 guide notification is stored in the graphics buffer 107 (No in step S725), then the video processor 2161 writes the output subject frame to the frame buffer 162 (step S740).

When the frame on which the overlay process is being applied is part of a 3D video, the 3D video frame stored in the frame buffer 104 is split into two halves and expanded, an L-picture and an R-picture are generated therefrom, and the overlay process is applied to the frames made up of each of the two pictures. As described above, the overlay processing involves, for example, overlaying the type-2 guide notification or the type-3 guide notification on the frames displayed for a five-second interval.

### 3.3 Variations

The above explanations are given in accordance with Embodiment 3. However, the present invention is not limited as such. For example, the following variations are also possible.

(1) In the above-described Embodiment, when the given channel changes from one program to another, the digital television 2100 determines whether the other program is in 2D or in 3D, and in the latter case, also determines whether or not a type-1 guide notification is being made thereby. However, the present invention is not limited as such.

The determination may also be made before the program change time (e.g., one minute earlier).

In such a case, the SEI-format data in the frame immediately preceding the program change includes a guide advisor flag. The value of the flag is set to 0 if the other program is not making a type-1 guide notification, and is set to I if the other program is making a type-1 guide notification. If the guide advisor flag is not set, then the other program is in 2D.

Specifically, one minute before the program change, the flag processor 2102 determines whether or not the guide advisor flag in the SEI-format data for the received frame has been set. In the affirmative case, the flag processor 2102 determines whether the value of the notification flag is 1 or 0. If the value of the notification flag is 0, then the flag processor 2102 determines that a type-2 guide notification is to be generated. If the value of the notification flag is 1, then the flag processor 2102 determines that a type-2 guide notification is not to be generated. If the guide advisor flag has not been set, then much like in Embodiment 1, the flag processor 2102 determines whether or not a type-3 guide notification is to be generated according to the value of the notification flag. The subsequent operations are identical to those described in Embodiment 1. Explanations thereof are thus omitted.

(2) In the above-described Embodiment, the SEI-format data may also include a guidance flag to further indicate whether the corresponding frame is currently making the type-1 guide notification or whether the notification is already complete.

In such a case, the flag processor 2102 determines whether or not a type-2 guide notification is to be generated according to the value of the guidance flag of the frame received after the power supply is activated or the channel is changed. Specifically, the flag processor 2102 determines that no type-2 guide notification is to be generated when the guidance flag value indicates that the type-1 guide notification is currently in progress, and determines that the type-2 guide notification is to be generated when the guidance flag value indicates that the type-1 guide notification is already complete.

(3) The above-described guide advisor flag and guidance flag are distinct from the 3D program ID flag. However, the present invention is not limited as such.

The 3D program ID flag may be assigned individual values corresponding to the guide advisor flag and to the guidance flag.

(4) The above-described guidance flag may be assigned a 3D program ID flag value of 0x21.

Under such circumstances, a 3D program ID flag of 0x21 is assigned only to the frames of the 3D program actually involved in making the type-1guide notification, while all other frames have a 3D program ID flag of 0x20.

When the power supply is activated or the channel is changed, the digital television generates a type-2 guide notification when the 3D program ID flag included in the received frames has a value of 0x20, and does not generate a type-2 guide notification when the 3D program ID flag has a value of 0x21 because a type-1 guide notification is currently being made.

Suppose that a change in programming from 2D to 3D is detected while a single channel is being viewed, i.e., from frames in which the 3D program ID flag has not been set to frames in which the 3D program ID flag has been set. Under such circumstances, the digital television generates a type-2 guide notification when the value of the 3D program ID notification is 0x20 and does not generates a type-2 guide notification when the value of the 3D program ID notification is 0x21.

Also, under such circumstances, the 3D program ID flag value of all frames used in a type-1 guide notification may be 0x21. Furthermore, a subset of the frames used in a type-1 guide notification, such as the frames appearing during a fixed interval during which all frames are used in the type-1 guide notification, may have a 3D program ID flag value of 0x21.

(5) In the above-described Embodiment, the digital television 2100 processes the type-2 guide notification for display as overlaid on the output subject frame. However, the present invention is not limited as such.

The digital television 2100 may also output the content of the type-2 guide notification as a single-frame image rather than as overlaid on the output subject content frames.

Alternatively, the digital television 2100 may display the type-2 guide notification guide notification as subtitles or as a data broadcast.

Furthermore, the digital television 2100 may use an audio notification unaccompanied by a display.

Also, the content of the type-2 guide notification may be transmitted to a portable terminal (portable computer, mobile phone, or similar) capable of communicating with the digital television 2100 for display thereon.

(6) The display format of the type-1 guide notification is not specified in the above-described Embodiment. Any format may be used, as long as the user is effectively prompted to have the 3D glasses ready.

For example, video, audio, or a combination thereof may be used to notify the user. Alternatively, the notification may be made with subtitles, or through a data broadcast. Also, the content of the type-1 guide notification may be transmitted to a portable terminal (portable computer, mobile phone, or similar) capable of communicating with the digital television 2100 for display thereon.

(7) In the above-described Embodiment, the type-2 guide notification is displayed for five seconds. However, the present invention is not limited as such.

The display interval may also take some other value.

Also, the type-2 guide notification display may be displayed until a display end instruction is received from the user. In such circumstances, the video processor 2161 performs overlay processing until the display end instruction is received from the user.

Further, the digital television 2100 may be made capable of detecting the fact that the user has put on the 3D glasses. The type-2 guide notification or the type-3 guide notification may be displayed until such a detection is made. A specific example of this variation has been described above, and is thus omitted.

(8) In the above-described Embodiment, the digital television 2100 outputs the 3D video by outputting the L-pictures and the R-pictures in alternation after displaying the type-1 guide notification or the type-2 guide notification. However, the invention is not limited as such. The digital television 2100 may have the user select the viewing mode while displaying the type-1 guide notification or the type-2 guide notification. The viewing mode selection may involve, for example, selecting between stereoscopic or monoscopic video, or opting to view the frames as they are, before splitting into L-pictures and R-pictures.

The details of this selection have been described in the variations on Embodiment 1 given above and are thus omitted.

(9) The above-described Embodiment and variations may be freely combined.

### 3.4 Specific Examples

Specific examples are given below, illustrating the output of each type of guide information.

### (1) Judgement Process at Program Start

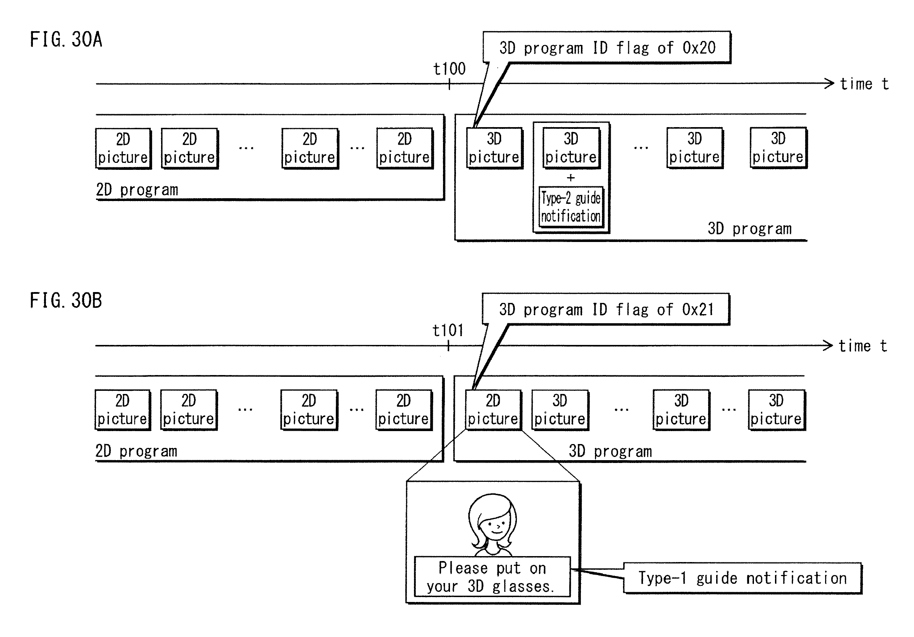

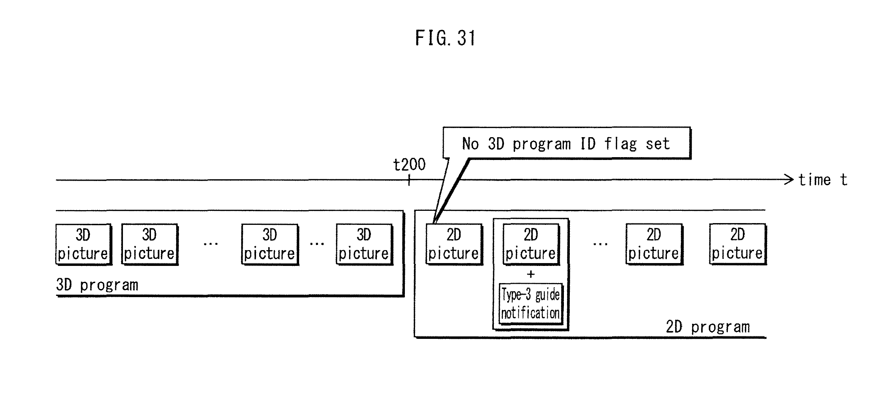

Specific examples of determinations made when a program starts are given below with reference to Figs. 30A, 30B, and 31.

As shown in Figs. 30A and 30B, programming changes from 2D to 3D occur at times t100 and t101. Also, as shown in Fig. 31, a programming change from 3D to 2D occurs at time t200.

### (1-1) Displaying a Type-2 Guide Notification

As shown in Fig. 30A, at time t100, the flag processor 2102 uses the 3D program ID flag included in the SEI-format data corresponding to the program beginning at time t100 to determine whether the program is in 3D, and if so, whether or not a type-1 guide notification is being made thereby. Here, the 3D program ID flag has been set to the value 0x20. Thus, the flag processor 2102 determines that the upcoming program is in 3D and that no type-1 guide notification is being made thereby.

Given the results determined by the flag processor 2102, the guide information generator 106 generates a type-2 guide notification. Then, the video processor 2161 overlays the type-2 guide notification so generated on the output subject video frame for output to the viewer 163. For convenience, Fig. 30A indicates that the type-2 guide notification is overlaid on only one frame. However, as described above, the type-2 guide notification is actually overlaid on all frames displayed for a five-second interval.

### (1-2) Displaying a Type-1 Guide Notification

As shown in Fig. 30B, at time t101, the flag processor 2102 uses the 3D program ID flag included in the SEI-format data corresponding to the program beginning at time t101 to determine whether the program is in 3D, and if so, whether or not a type-1 guide notification is being made thereby. Here, the 3D program ID flag has been set to the value 0x21. Thus, the flag processor 2102 determines that the upcoming program is in 3D and that a type-1 guide notification is being made thereby.

Given the results determined by the flag processor 2102, the guide information generator 106 does not generate a type-2 guide notification. Then, at time t101, the video processor 2161 outputs a video frame (a 2D video frame displaying the type-1 guide notification) to the viewer 163. Although Fig. 30B only indicates one 2D frame, a predetermined number of frames are actually output.

### (1-3) Displaying a Type-3 Guide Notification

As shown in Fig. 31, at time t200, the flag processor 2102 uses the 3D program ID flag included in the SEI-format data corresponding to the program beginning at time t200 to determine whether the program is in 3D, and if so, whether or not a type-1 guide notification is being made thereby. Here, the 3D program ID flag has not been set. Therefore, the flag processor 2102 determines that the upcoming program is in 2D.

Given the results determined by the flag processor 2102, the guide information generator 106 generates a type-3 guide notification. Then, the video processor 2161 overlays the type-3 guide notification so generated on the output subject video frame for output to the viewer 163. For convenience, Fig. 31 indicates that the type-3 guide notification is overlaid on only one frame. However, as described above, the type-3 guide notification is actually overlaid on all frames displayed for a five-second interval.

### (2) Guide Advisor Flag-Using Judgements

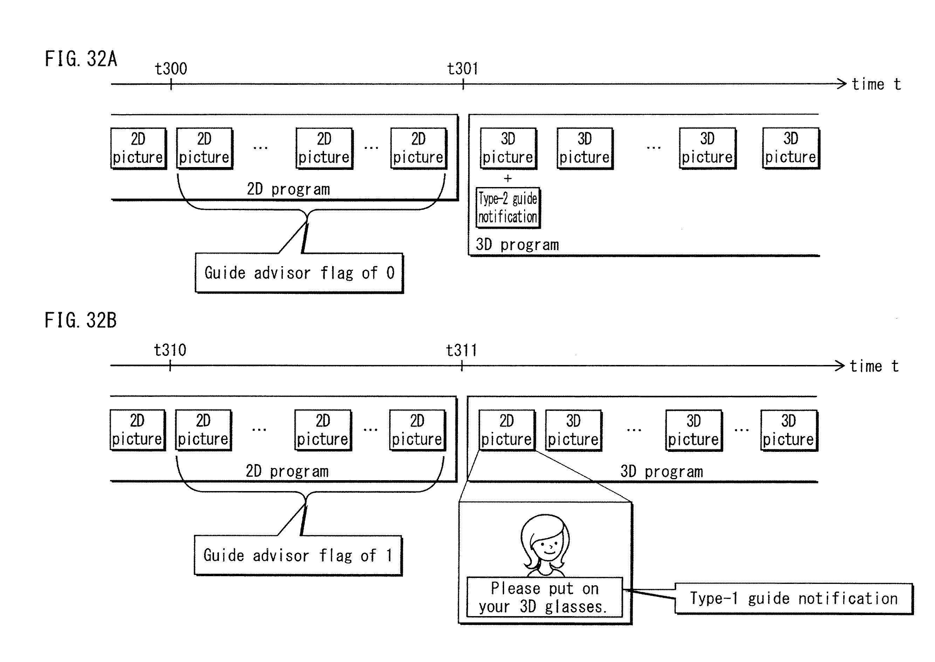

Specific examples of judgements made using the guide advisor flag are given with reference to Figs. 32A and 32B.

As shown in Figs. 32A and 32B, programming changes from 2D to 31D occur at times t301 and t311.

### (2-1) Displaying a Type-2 Guide Notification

As shown in Fig. 32A, at time t300 (one minute before time t301), the flag processor 2102 uses the guide advisor flag included in the SEI-format data corresponding to the received frame to determine whether the program beginning at time 301 is in 3D, and if so, whether or not a type-1 guide notification is being made thereby. Here, the guide advisor flag is set to 0. Thus, the flag processor 2102 determines that the upcoming program is in 3D and that no type-1 guide notification is being made thereby.

Given the results determined by the flag processor 2102, the guide information generator 106 generates a type-2 guide notification. Then, at time t301, the video processor 2161 overlays the type-2 guide notification so generated on the output subject video frame for output to the viewer 163. For convenience, Fig. 32A indicates that the type-2 guide notification is overlaid on only one frame. However, as described above, the type-2 guide notification is actually overlaid on all frames displayed for a five-second interval.

### (2-2) Displaying a Type-1 Guide Notification

As shown in Fig. 32B, at time t310 (one minute before time t311), the flag processor 2102 uses the guide advisor flag included in the SEI-format data corresponding to the received frame to determine whether the program beginning at time 311 is in 3D, and if so, whether or not a type-1 guide notification is being made thereby. Here, the guide advisor flag is set to 1. Thus, the flag processor 2102 determines that the upcoming program is in 3D and that a type-1 guide notification is being made thereby.

Given the results determined by the flag processor 2102, the guide information generator 106 does not generate a type-2 guide notification. Then, at time t311, the video processor 2161 outputs a video frame (a 2D video frame displaying the type-1 guide notification) to the viewer 163. Although Fig. 32B only indicates one 2D frame, a predetermined number of frames are actually output.

### (3) Guidance Flag-Using Judgements

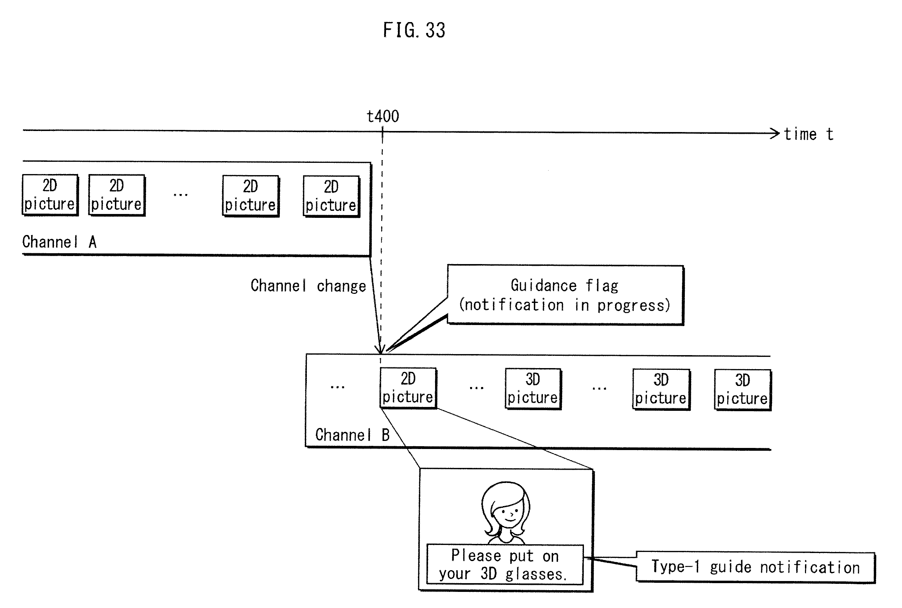

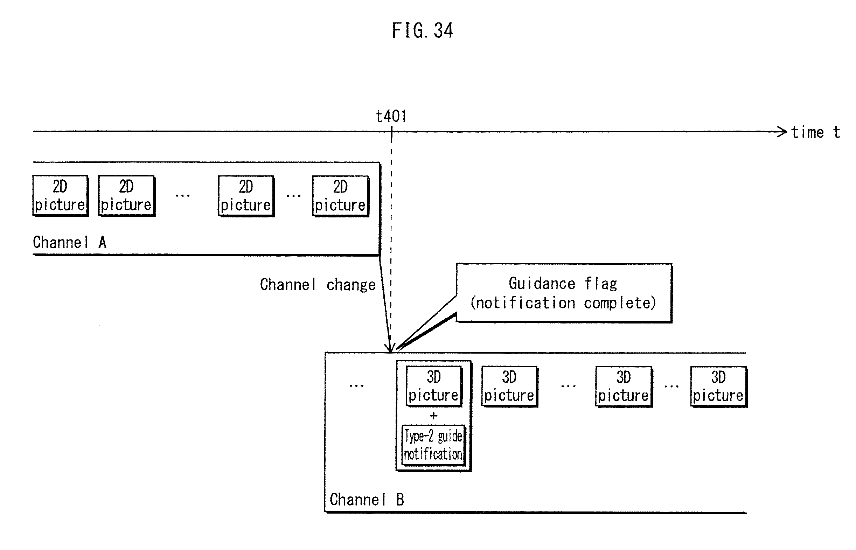

Specific examples of judgements made using the guidance flag are given with reference to Figs. 33 and 34.

As shown in Figs. 33 and 34, a change from channel A to channel B occurs at time t400 and at time t401.

### (3-1) Displaying a Type-1 Guide Notification

As shown in Fig. 33, when the channel is changed at time t400, the flag processor 2102 uses the guidance flag included in the SEI-format data of the frame received after the channel is changed to determine whether the program in which the frame is included is currently making or has already made a type-1 guide notification prompting the user to prepare the 3D glasses. Here, the guidance flag indicates that such a notification is in progress. Under such circumstances, the flag processor 2102 concludes that a type-1 guide notification is being made at the time the channel is changed.

Given the results thus determined by the flag processor 2102, the guide information generator 106 does not generate a type-2 guide notification. Then, at time t400, the video processor 2161 outputs a video frame (a 2D video frame displaying the type-1 guide notification) to the viewer 163. While Fig. 33 indicates only one 2D video frame being output, a number of 2D frames filling the display interval are actually output.

### (3-2) Displaying a Type-2 Guide Notification

As shown in Fig. 34, when the channel is changed at time t401, the flag processor 2102 uses the guidance flag included in the SEI-format data of the frame received after the channel is changed to determine whether the program in which the frame is included is currently making or has already made a type-1 guide notification prompting the user to prepare the 3D glasses. Here, the guidance flag indicates that such a notification has already been made. Under such circumstances, the flag processor 2102 concludes that a type-1 guide notification was made before the channel change.

Given the results thus determined by the flag processor 2102, the guide information generator 106 generates a type-2 guide notification. Then, the video processor 2161 overlays the type-2 guide notification so generated on the output subject video frame for output to the viewer 163. For convenience, Fig. 34 indicates that the type-2 guide notification is overlaid on only one frame. However, as described above, the type-2 guide notification is actually overlaid on all frames displayed for a five-second interval beginning at time t400.

### 4. Variations

The present invention has been described above using Embodiments and variations thereon. However, the present invention is not limited as such. For example, the following variations are also possible.

(1) In the above-described Embodiments, the digital television generates the type-2 guide notification and the type-3 guide notification. However, the present invention is not limited as such.

Each of the broadcasters broadcasting programs may also provide the type-2 guide notification and the type-3 guide notification in a data broadcast.

Specifically, each broadcaster transmits a data broadcast for a given program that includes a type-2 guide notification for use when the 3D program ID flag is set to 0x20. The flag processor of the digital television determines that the 3D program ID flag corresponding to the received stream is set to 0x20 and that the notification flag is 0. Therefore, the guide information generator obtains the type-2 guide notification included in the data broadcast received with the stream.

Also, when programming changes from 3D to 2D, the guide information generator obtains the type-3 guide notification included in the data broadcast received with the stream.

(2) In the above-described Embodiments, a 3D program-compatible digital television (hereinafter, 3D television) is described as displaying the guide information.

However, a non-3D program-compatible digital television (hereinafter, 2D television) may also be used, as follows.

The 2D television may, for example, reference the 3D program ID flag and, when the corresponding program is in 3D, either make a notification to such effect or to the effect that the television is not compatible with 3D programming. Under such circumstances, the 2D television may, for example, display 3D video frames that are not split into L-pictures and R-pictures.

Alternatively, the 2D television may make either of the above-described notifications by referencing a data heading other than that referenced by a 3D television when determining whether or not to generate a guide notification.

Furthermore, when a given program is making notifications through a data broadcast, different data broadcasts may be prepared for 2D and 3D televisions so that the appropriate data is used upon checking the type of digital television in use (i.e., whether or not the television is 3D-compatible). Specifically, the data broadcast for 3D televisions includes a type-1 guide notification while the data broadcast for 2D televisions includes information indicating that the corresponding program is in 3D, or information indicating that the corresponding 3D program is not compatible with the television.

A specific example of the mechanism by which the different notifications for 2D and 3D televisions are made is given below.

Here, a new descriptor is added to the EIT to indicate a substitute stream activated only for 3D televisions.

The new descriptor includes a status flag, an active video flag, an active audio flag, an active data flag, and an active data ID.

The status flag indicates the status of the descriptor to be activated. For example, 0x01 indicates that the receiving device is a 3D television. That is, the appropriate descriptor is activated when the receiving device is a 3D television.

The active video flag indicates whether any video component (equivalent to the type-1 guide notification in the above-described Embodiments) is to be prioritized when the status flag is set appropriately (i.e., when the receiving device is a 3D television). For example, the active video flag is set to 1 when there is a video component to be prioritized, and set to 0 otherwise.

The active audio flag indicates whether any audio component (equivalent to the type-1 guide notification in the above-described Embodiments) is to be prioritized when the status flag is set appropriately. For example, the active audio flag is set to 1 when there is an audio component to be prioritized, and set to 0 otherwise.

The active data flag indicates whether any data component (equivalent to the type-1 guide notification in the above-described Embodiments) is to be prioritized when the status flag is set appropriately. For example, the active data flag may be set to I to indicate that a data component is to be prioritized, and set to 0 otherwise.

Also, when the active data flag is set to 1, the active data ID indicates the data encoding format of the data component to be prioritized. For example, 0x0007 indicates that the data encoding format is that of a data broadcast, while 0x0008 indicates subtitles.

The new descriptor described above is added to the EIT. Thus, the receiving device (3D television) is able to determine the nature of the type-1 guide notification made by the 3D program (video, audio, data, or subtitle notification) by checking the valid video, valid audio, and valid data flags. Then, if no type- guide notification is found, a type-2 guide notification is generated and used.

The new descriptor described above may also be added to the SDT (Service Description Table) rather than to the EIT.

(3) In the above-described Embodiments, the signal format of the video streams that include the delivered (output) frames follows the H.264/MPEG4 AVC standard. However, the present invention is not limited as such.

The signal format of the delivered (output) stream may also follow the MPEG2, VC1, AVS, or other similar standards.

(4) In the above-described Embodiments, the 3D program ID flag is written in the EIT. However, the present invention is not limited as such.

The 3D program ID flag may also be written in the PSI (Program Specific Information).

For instance, the PMT (Program Map Table) may be used as the PSI. In such a case, the 3D program ID flag is written into the PMT.

Alternatively, the SDT (Service Description Table) may be used rather than the EIT. In such a case, the 3D program ID flag is written into the SDT.

(5) In Embodiment 2, as described above, the file attribute information follows the ETSI TS 102 822 standard. However, the present invention is not limited as such.

The file attribute information may follow another standard, or even be in a unique format.

For example, the information may follow the ISO/IEC 14496-12 standard. Alternatively, the information may follow another BDA (Blu-ray Disc Association), SDA (SD Association), DVD Forum or other similar standard.

(6) In Embodiment I, as described above, the presence of a type-1 guide notification is determined according to the PSI or the SI multiplexed with the stream. However, the present invention is not limited as such.

The video processing device (digital television) may store or the EPG (Electronic Program Guide), which is made up of the above-described SI or of information in another format, in advance, and use the EPG to determine whether or not a type-1 guide notification is made by the program corresponding to the received stream.

(7) In Embodiment 2 as described above, the digital television 1100 and the playback device 1200 are separate devices. However, the present invention is not limited as such.

The digital television 1100 and the playback device 1200 may be combined into a single device.

(8) In the above-described Embodiments, the digital television receives programs as broadcast waves, over an IP network, and from a recording medium. However, the present invention is not limited as such.

The digital television may utilize any one or more of these options.

(9) In the above-described Embodiments, the frame buffer is physically distinct from the first buffer and the second buffer (the L-video buffer and the R-video buffer). However, the present invention is not limited as such.

The first buffer, the L-video buffer, and the R-video buffer may all be a common physical component, used through time division, as required.

(10) In the above-described Embodiments, the refresh rate for 2D video is 1/60 seconds. However, the present invention is not limited as such.

Another refresh rate (such as 1/50 seconds) may also be used for 2D video. Under such circumstances, the refresh rate for 3D video is half the refresh rate for 2D video (e.g., 1/100 seconds).

(11) In the above-described Embodiments, a video processing device, video processing method, program, and video distribution method pertaining to the present invention are described as using a Frame Compatible format, such as Side-by-Side. However, the present invention is not limited as such.

The video processing device, video processing method, program, and video distribution method of the present invention may also display 2D and 3D programming using a Service Compatible format.

(12) In Embodiment 2, described above, the video processing device includes the digital television 1100 and the playback device 1200. However, the present invention is not limited as such.

An STB (Set-Top Box) may be used instead of the playback device 1200. In such a case, the STB includes, for example, the signal input unit 101 described in Embodiment I rather than the content memory 1201, playback controller 1202, instruction receiver 1203, and video decoder 1208.

(13) In Embodiment I described above, the 3D program ID flag is contained meta data that follows the ETSI TS 102 822(TV Anytime) standard. However, the invention is not limited as such.

The 3D program ID flag may also take the following form.

### (13-1) VideoAttributes Extension

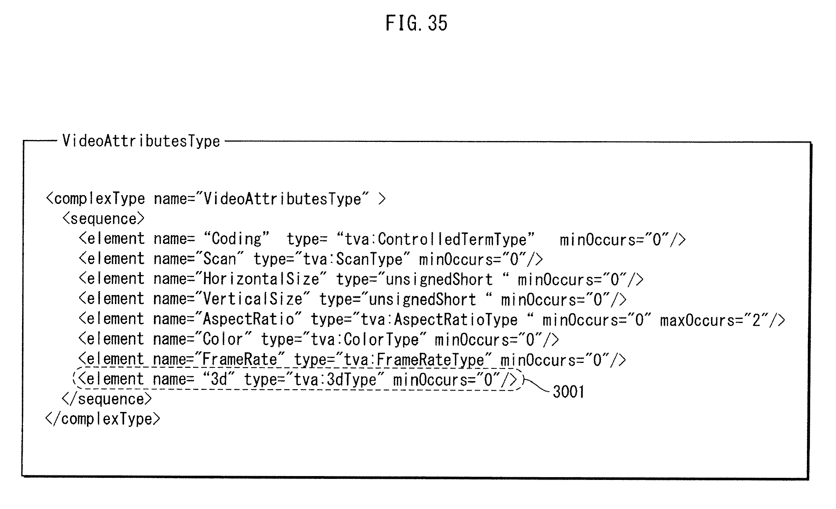

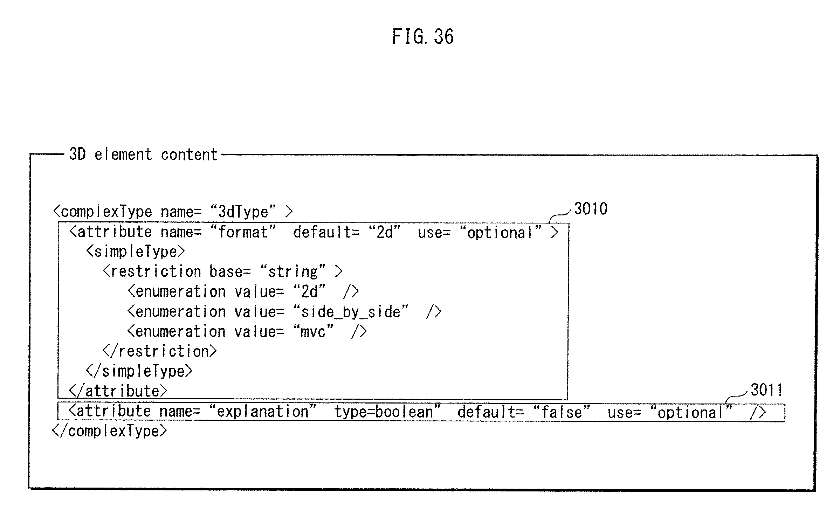

As shown in Fig. 35, the VideoAttributes type within the AVAttributes type defined in the ETSI TS 102 822-3-1 standard has an additional element pertaining to 3D programming (hereinafter, 3D element). As illustrated by the example of Fig. 36, the 3D element 3001 is made up of a format attribute 3010 and an explanation attribute 3011. The format attribute 3010 describes the format of 3D programming or similar. For example, the value of the format attribute reads "2D" when the corresponding program is in 2D, "side-by-side" when the corresponding program is a 3D program in the Side-by-Side format, "mvc" when the corresponding program is in 3D and is encoded using an H.264/MVC codec, and so on. The explanation attribute 3011 describes whether or not a type-1 guide notification is present in the program. For example, an explanation of "false" indicates that no type-1 guide notification is present, while "true" indicates that a type-1 guide notification is present in the program.

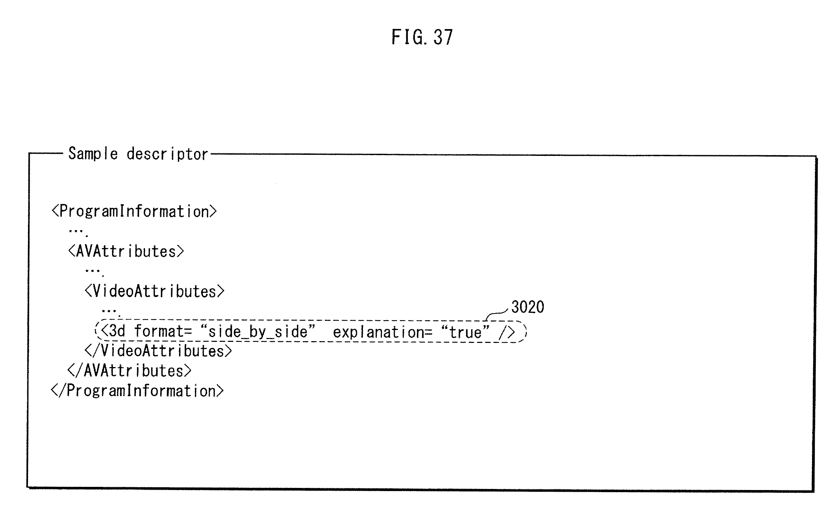

Fig. 37 shows a sample descriptor. In this example, the descriptor element 3020 indicates that the format of the corresponding 3D program is Side-by-Side, and that a type-1 guide notification is present.

### (13-2) ERI Extension

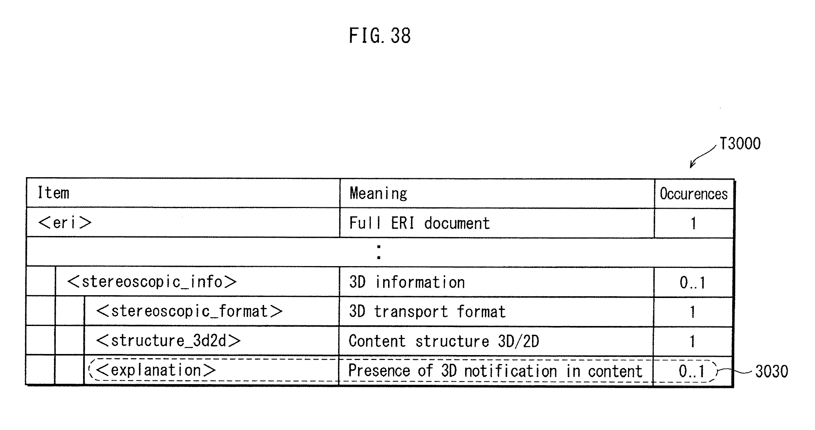

Alternatively, the meta data may be an ERI document as defined by the Networked Digital Television, Codec Chapter. Under such circumstances, as shown in Fig. 38, an explanation element 3030 is added to the "stereoscopic info" portion of the ERI document 3000. The explanation element 3030 indicates the presence of a type-1 guide notification in the program, such that "false" indicates that no type-1 guide notification is present, while "true" indicates that a type-1 guide notification is present in the program.

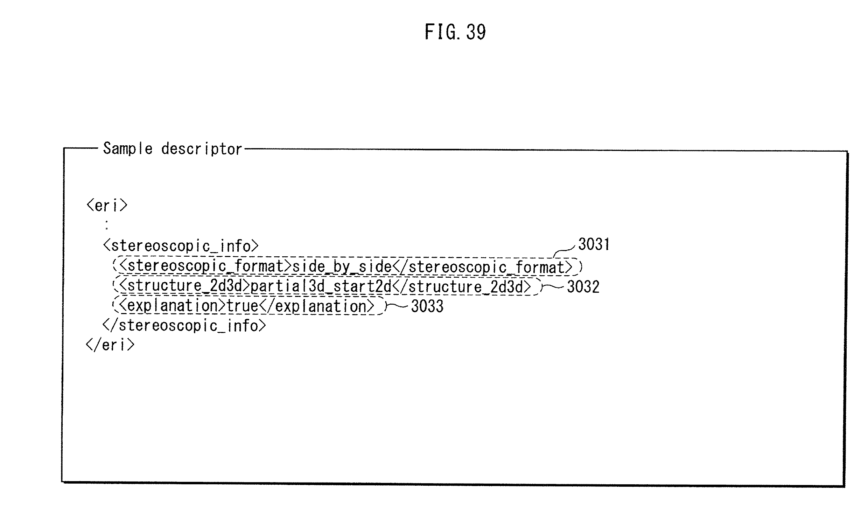

According the sample descriptor shown in Fig. 39, the descriptor element 3031 indicates that the format of the corresponding program is Side-by-Side, and the descriptor element 3033 indicates that a type-1 guide notification is present in the corresponding program.

Also, rather than use the descriptor element 3033 from Fig. 39 to determine the presence of a type-1 guide notification in the program, the explanation element 3030 may, for example, use the descriptor element 3032 to determine the presence of a type-1 guide notification according to whether the value thereof is "partial3d_start2d" i.e., 3D video is mixed in with 2D video, and the program begins with 2D video.

(14) In Embodiment 3 as described above, the 3D program ID flag may be contained in the following.

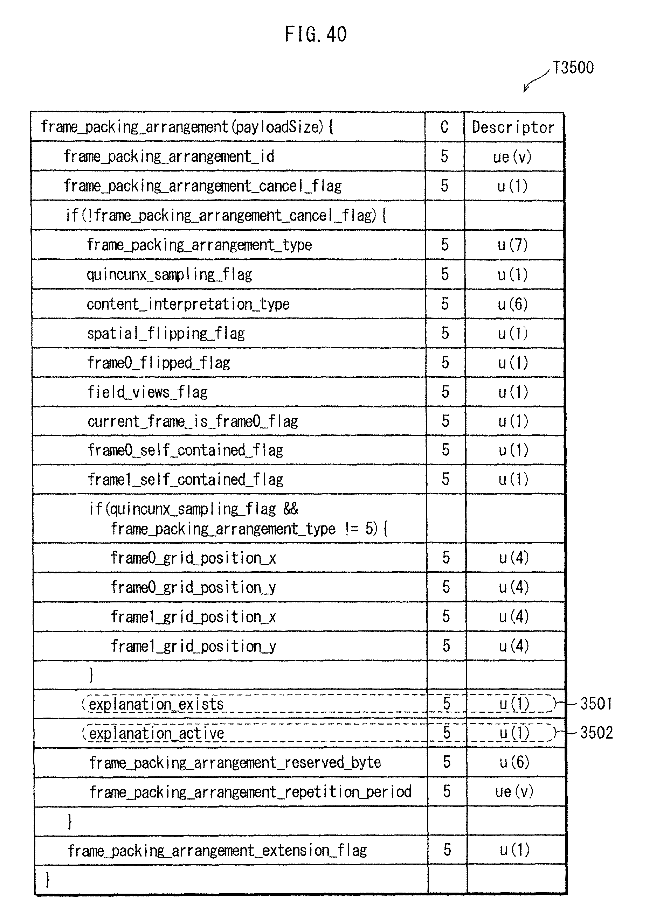

For example, as shown in Fig. 40, an explanation_exists element 3501 and an explanation_active element 3502 may be added to the frame packing arrangement SEI defined in the H.264/MPEG4 AVC standard.

The explanation_exists element 3501 indicates the presence or absence of a type-1 guide notification in the corresponding frame included in the program in having a value of 1 when a type-1 guide notification is present and a value of 0 when a type-1 guide notification is not present.

In addition, the explanation_active element 3502 indicates whether or not the type-1 guide notification in the corresponding frame is currently being displayed. For example, a value of 0 indicates that the type-1 guide notification is not currently being displayed, while a value of I indicates that the type-1 guide notification is currently being displayed.

(15) The above-described Embodiments may be recorded as a series of instructions in a program and stored in memory to be realized by a CPU (Central Processing Unit) reading the program from memory and executing the instructions.

Also, the program in which the series of instructions is written may be stored on a recording medium for distribution.

(16) The components of the above-described Embodiments may be realized as an LSI (Large-Scale Integration) integrated circuit. The components may each be realized on individual chips. The components may also be realized, in whole or in part on a single chip. Although an LSI is suggested, the integration method is not limited as such. An IC (Integrated Circuit), a system LSI, a super LSI, and an ultra LSI may all be used. The integrated circuit method is not limited to LSI, but may also employ a private circuit or a general-purpose processor. Also, a FPGA (Field Programmable Gate Array) or a reconfigurable processor may be used. Alternatively, functional block calculations may be carried out using a DSP (Digital Signal Processor) or a CPU. Furthermore, each processing step may be recorded as a program on a recording medium for execution.

Further still, advances and discoveries in semiconductor technology may lead to a new technology replacing LSI. The present invention may, of course, be applied to such future technology. Biotechnology applications are also plausible.

(17) The judgement processes of the present invention may involve each of the flag processors of the above-described Embodiments. Also, the display process methods used by the present invention may involve a combination of the guide information generator and the output processor.

(18) The above-described Embodiment and variations may be freely combined.

### 5. Supplement

(1) In one aspect of the present invention, a video processing device comprises: a receiver operable to receive video data including a subject program for viewing, and flag information indicating whether or not the video data includes type-1 guide information, the type-1 guide information being used for making a predetermined notification pertaining to 3D viewing to a user when the subject program is in 3D; a determiner operable to determine, according to the flag information so received, whether or not the user is to be notified using the type-1 guide information when the subject program is in 3D; and an output controller operable to output programming from the video data so received, and, when the subject program is in 3D (i) output type-2 guide information for making the predetermined notification to the user when the determiner determines that the user is not to be notified using the type-1 guide information, and (ii) prevent output of the type-2 guide information when the determiner determines that the user is to be notified using the type-1 guide information.

Accordingly, the video processing device prevents the output of a type-2 guide notification when a type-1 guide notification is made by the program being viewed, and outputs a type-2 guide notification when no type-1 guide notification is made. Thus, no duplication of notifications occurs during the program. Therefore, the user is able to view programs without being bothered by announcements regarding 3D programming.

(2) Also, the output controller generates the type-2 guide information when the determiner determines that the user is not to be notified using the type-1 guide information, and outputs the type-2 guide information so generated along with the programming from the video data.

According to this structure, the video processing device outputs a type-2 guide notification during program output. Thus, the user receives the type-2 guide notification while viewing the program.

(3) In addition, the output controller outputs the type-2 guide information as an overlay on video making up the programming.

According to this structure, the video processing device makes the type-2 guide notification through a telop. Thus, notifications can be delivered without impeding viewing.

(4) Also, the predetermined notification prompts the user to prepare 3D glasses in order to view the subject program as a 3D program.

According to this structure, the video processing device uses a type-1 guide notification or a type-2 guide notification to prompt the user to have the 3D glasses ready. Thus, the user is prepared to begin viewing a 3D program.

(5) Furthermore, the flag information includes time information indicating a time interval during which the type-1 guide information is to be output, and the determiner determines whether or not the type-1 guide information is to be output according to the time interval indicated by the time information.

According to this structure, the video processing device determines whether or not a type-1 guide notification is being made according to the interval during which the type-1 guide notification is to be output. Thus, when, for example, the time at which the user begins viewing is after the interval during which the type-1 guide notification is to be made, the video processing device outputs a type-2 guide notification. The user is therefore certain to receive a notification relevant to the program being viewed.

(6) In addition, the receiver begins to receive the video data for a channel selected through a user operation, or for a channel automatically selected upon power supply activation, and when the 3D program is first received after the channel selection or the power supply activation, the determiner determines that the user is not to be notified using the type-1 guide information for the 3D program when (i) according to the time interval indicated by the time information for the 3D program, a time at which the user can be notified using the type-1 guide information has already passed, and (ii) the flag information indicates that the video data does not include the type-1 guide information for the 3D program.

According to this structure, at channel selection and power activation time, the video processing device reliably makes a type-1 guide notification or a type-2 guide notification for the first 3D program received according to the determined results.

(7) Also, the determiner determines that the user is to be notified using the type-1 guide information when the time interval indicated by the time information denotes that the type-1 guide information is to be output constantly while the 3D program is being output.

According to this structure, the video processing device is able to prevent the type-2 guide notification from being output when the type-1 guide notification is found to be ordinarily output during the interval indicated by the time information.

(8) Additionally, the receiver begins to receive the video data for a channel selected through a user operation, or for a channel automatically selected upon power supply activation, and when the 3D program is first received after the channel selection or the power supply activation, and the time interval indicated by the time information denotes that the type-1 guide information is to be output with a predetermined periodicity while the 3D program is being output, the determiner determines (i) that the user is not to be notified using the type-1 guide information if, given the predetermined periodicity, a time span from the initial reception of the 3D program until a first period during which the user is to be notified using the type-1 guide information exceeds a reference time span, and (ii) that the user is to be notified using the type-1 guide information if the time span does not exceed the reference time span.

According to this structure, at channel change and power activation time, the video processing device is able to prevent the type-2 guide notification from being output according to the time at which the first 3D program is received and the display interval of the type-1 guide notification is found.

(9) Further, the 3D program is recorded content stored on a recording medium, the video data includes a video stream forming the 3D program, the receiver receives the flag information for the 3D program from the recording medium before receiving the video stream included in the recorded content from the recording medium, and when the type-2 guide information is to be output, the output controller begins to output the recorded content after the type-2 guide information.

According to this structure, the video processing device outputs the type-2 guide notification before the recorded content is output when no type-1 guide notification is made by the recorded content stored on the recording medium. Thus, the user receives either the type-1 guide notification or the type-2 guide notification when viewing recorded content.

(10) Also, the flag information includes additional information in association with the subject program, the video data is a video stream forming the subject program multiplexed with the additional information, and the receiver obtains the flag information by demultiplexing the video stream forming the subject program and the additional information.

According to this structure, the video processing device obtains flag information from the video information multiplexed with the video stream and the additional information added thereto.

(11) Further still, the video data is a video stream, the video stream includes a plurality of video frames forming the subject program, the flag information is included in data associated with each of the video frames, and the receiver extracts the flag information from each of the video frames.

According to this structure, the video processing device obtains flag information from data accompanying the video frame.

(12) In addition, the video data is broadcast by a broadcaster, the determiner determines whether or not the user is to be notified using the type-1 guide information by treating a subsequent program that follows a program currently being output as the subject program, and the output controller generates the type-2 guide information when the user is not to be notified using the type-1 guide information, and outputs the type-2 guide information so generated at a start time for the subsequent program, or during a predetermined interval before the start time for the subsequent program.

According to this structure, the video processing device determines whether or not the upcoming program is making a type-1 guide notification before the upcoming program start time.

(13) Alternatively, in another aspect of the present invention, a distribution method used by a device for distributing programs, comprising a distribution step of distributing (i) video data that includes a subject program for viewing and (ii) flag information that indicates whether or not a receiving device is to generate information for making a predetermined notification to a user according to whether or not type-1 guide information for making the predetermined notification to the user when the subject program is in 3D is included in the video data.

According to this structure, the distribution method involves distributing video information and flag information. Thus, the receiver is able to judge the need to generate predetermined notification information for the user according to the presence or absence of the type-1 guide notification in the video information. Given that the receiver prevents redundant notifications from being made during the program, the user is able to view programs without being bothered by announcements regarding 3D programming.

### [Industrial Applicability]

The above-described video processing device is applicable to any circumstance in which 3D video and 2D are both displayed.

**[Reference Signs List]**

| | |
|---|---|
| 100 | Digital television |
| 101 | Signal input unit |
| 102 | Flag processor |
| 103 | Frame format determiner |
| 104 | Frame buffer |
| 105 | Output processor |
| 106 | Guide information generator |
| 107 | Graphics buffer |
| 151 | Tuner |
| 152 | NIC |
| 153 | Demultiplexer |
| 154 | Video decoder |
| 161 | Video processor |
| 162 | Frame buffer |
| 163 | Viewer |
| 171 | First buffer |
| 172 | Second buffer |
| 173 | L-video buffer |
| 174 | R-video buffer |
| 181 | Switch |
| 182 | Display |
| 183 | Change controller |

## Claims

1. A video processing device, comprising:
a receiver operable to receive video data including a subject program for viewing, and flag information indicating whether or not the video data includes type-1 guide information, the type-1 guide information being used for making a predetermined notification pertaining to 3D viewing to a user when the subject program is in 3D;
a determiner operable to determine, according to the flag information so received, whether or not the user is to be notified using the type-1 guide information when the subject program is in 3D; and
an output controller operable to output programming from the video data so received, and, when the subject program is in 3D (i) output type-2 guide information for making the predetermined notification to the user when the determiner determines that the user is not to be notified using the type-1 guide information, and (ii) prevent output of the type-2 guide information when the determiner determines that the user is to be notified using the type-1 guide information.

2. The video processing device of Claim I, wherein
the output controller generates the type-2 guide information when the determiner determines that the user is not to be notified using the type-1 guide information, and outputs the type-2 guide information so generated along with the programming from the video data.

3. The video processing device of Claim 2, wherein
the output controller outputs the type-2 guide information as an overlay on video making up the programming.

4. The video processing device of Claim 1, wherein
the predetermined notification prompts the user to prepare 3D glasses in order to view the subject program as a 3D program.

5. The video processing device of Claim 4, wherein
the flag information includes time information indicating a time interval during which the type-1 guide information is to be output, and
the determiner determines whether or not the type-1 guide information is to be output according to the time interval indicated by the time information.

6. The video processing device of Claim 5, wherein
the receiver begins to receive the video data for a channel selected through a user operation, or for a channel automatically selected upon power supply activation, and
when the 3D program is first received after the channel selection or the power supply activation,
the determiner determines that the user is not to be notified using the type-1 guide information for the 3D program when (i) according to the time interval indicated by the time information for the 3D program, a time at which the user can be notified using the type-1 guide information has already passed, and (ii) the flag information indicates that the video data does not include the type-1 guide information for the 3D program.

7. The video processing device of Claim 5, wherein
the determiner determines that the user is to be notified using the type-1 guide information when the time interval indicated by the time information denotes that the type-1 guide information is to be output constantly while the 3D program is being output.

8. The video processing device of Claim 5, wherein
the receiver begins to receive the video data for a channel selected through a user operation, or for a channel automatically selected upon power supply activation, and
when the 3D program is first received after the channel selection or the power supply activation, and the time interval indicated by the time information denotes that the type-1 guide information is to be output with a predetermined periodicity while the 3D program is being output,
the determiner determines (i) that the user is not to be notified using the type-1 guide information if, given the predetermined periodicity, a time span from the initial reception of the 3D program until a first period during which the user is to be notified using the type-1 guide information exceeds a reference time span, and (ii) that the user is to be notified using the type-1 guide information if the time span does not exceed the reference time span.

9. The video processing device of Claim 4, wherein
the 3D program is recorded content stored on a recording medium,
the video data includes a video stream forming the 3D program,
the receiver receives the flag information for the 3D program from the recording medium before receiving the video stream included in the recorded content from the recording medium, and
when the type-2 guide information is to be output, the output controller begins to output the recorded content after the type-2 guide information.

10. The video processing device of Claim 1, wherein
the flag information includes additional information in association with the subject program, the video data is a video stream forming the subject program multiplexed with the additional information, and
the receiver obtains the flag information by demultiplexing the video stream forming the subject program and the additional information.

11. The video processing device of Claim 1, wherein
the video data is a video stream,
the video stream includes a plurality of video frames forming the subject program,
the flag information is included in data associated with each of the video frames, and
the receiver extracts the flag information from each of the video frames.

12. The video processing device of Claim 1, wherein
the video data is broadcast by a broadcaster,
the determiner determines whether or not the user is to be notified using the type-1 guide information by treating a subsequent program that follows a program currently being output as the subject program, and
the output controller generates the type-2 guide information when the user is not to be notified using the type-1 guide information, and outputs the type-2 guide information so generated at a start time for the subsequent program, or during a predetermined interval before the start time for the subsequent program.

13. A video processing method used by a video processing device, comprising:
a reception step of receiving video data including a subject program for viewing, and flag information indicating whether or not the video data includes type-1 guide information, the type-1 guide information being used for making a predetermined notification pertaining to 3D viewing to a user when the subject program is in 3D;
a determination step of determining, according to the flag information so received, whether or not the user is to be notified using the type-1 guide information when the subject program is in 3D; and
an output control step of outputting programming from the video data so received, and, when the subject program is in 3D (i) outputting type-2 guide information for making the predetermined notification to the user when the determiner determines that the user is not to be notified using the type-1 guide information, and (ii) preventing output of the type-2 guide information when the determiner determines that the user is to be notified using the type-1 guide information.

14. A computer program used by a video processing device, causing the video processing device to execute:
a reception step of receiving video data including a subject program for viewing, and flag information indicating whether or not the video data includes type-1 guide information, the type- guide information being used for making a predetermined notification pertaining to 3D viewing to a user when the subject program is in 3D;
a determination step of determining, according to the flag information so received, whether or not the user is to be notified using the type-1 guide information when the subject program is in 3D; and
an output control step of outputting programming from the video data so received, and, when the subject program is in 3D (i) outputting type-2 guide information for making the predetermined notification to the user when the determiner determines that the user is not to be notified using the type-1 guide information, and (ii) preventing output of the type-2 guide information when the determiner determines that the user is to be notified using the type-1 guide information.

15. A distribution method used by a device for distributing programs, comprising
a distribution step of distributing (i) video data that includes a subject program for viewing and (ii) flag information that indicates whether or not a receiving device is to generate information for making a predetermined notification to a user according to whether or not type-1 guide information for making the predetermined notification to the user when the subject program is in 3D is included in the video data.

16. The distribution method of Claim 15, wherein
the video data and the flag information are distributed by a broadcaster, and
the flag information includes one of an EIT (Event Information Table), a PMT (Program MAP Table), and an SDT (Service Description Table).

17. The distribution method of Claim 15, wherein
the device is a recording medium,
the video data forms content stored on the recording medium, and
the flag information is meta data associated with the content.
